# EUROPÄISCHE PATENTANMELDUNG

(11) **EP 0 886 223 A2**
(43) Veröffentlichungstag der Anmeldung: **23.12.1998**
(21) Anmeldenummer: 98250214.8
(22) Anmeldetag: 16.06.1998
(51) Int. Cl.: G06F 15/02

(54) **Vorrichtung zur Währungsumrechnung**

(30) Priorität: 16.06.1997 DE 19725925
(71) Anmelder: Fimor S.A., 72058 Le Mans, Cedex 2 (FR)
(72) Erfinder: Zuckerman, Alex, 14163 Berlin (DE)
(74) Vertreter: Christiansen, Henning, Dipl.-Ing.

(57) **Zusammenfassung**

Vorrichtung zur Währungsumrechnung mit einer Eingabeeinheit (1), einer damit verbundenen Verarbeitungseinheit (2) zur Durchführung der Umrechnung und Steuerung der Ausgabe mittels einer mit der Verarbeitungseinheit (2) verbundenen Ausgabeeinheit (3), einem mit der Verarbeitungseinheit (2) verbundenen Speicher (4), einem Auslöseelement (5) zum Starten des Umrechnungsvorgangs und mindestens einem Auswahlelement (10) zur Auswahl der Umrechnungsrichtung, wobei die Recheneinheit (7; 7') über eine mit dem Ausgang der Auswahlsteuereinrichtung (12) verbundene, in Abhängigkeit vom Zustand der Auswahlsteuereinrichtung (12) geschaltete Umschaltvorrichtung (13) auf eine im Speicher (4) vorhandene erste oder zweite Umrechnungskonstante (C₁, C₂) zugreift, wobei die zweite Umrechnungskonstante den Kehrwert der ersten bildet, oder in Abhängigkeit vom Zustand am Ausgang (12.3) der Auswahlsteuereinrichtung (12) und gesteuert von der Auslöseeinheit (5) zur Multiplikation bzw. Division auf eine in dem Speicher (4") vorhandene Umrechnungskonstante (C₁) zugreift, und
die Umrechnungskonstanten als Festwerte in einem Speicher festgehalten sind, bei dem die Auswahl der Umrechnungskonstanten oder die Auswahl zwischen einer Betriebsmöglichkeit mit nur einer bzw. einem Paar von Umrechnungskonstanten und einer Betriebsmöglichkeit, die eine Auswahl zwischen mehreren Betriebsmöglichkeiten einschließt, durch eine nicht umkehrbare Einwirkung erfolgt.

## Beschreibung

Die Erfindung betrifft eine Vorrichtung gemäß dem Oberbegriff des Anspruchs 1.

Mit der Einführung einer einheitlichen Währung in Europa stellt sich das Problem eines Hilfsmittels zur Umrechnung von der bisherigen gewohnten Währung in die neue Währung und umgekehrt.

Hierzu wurden bereits einfache Taschenrechner für die Umrechnung von Wechselkursen umgestaltet. Eine derartige gattungsgemäße Vorrichtung ist beispielsweise aus dem deutschen Gebrauchsmuster 297 02 500 bekannt. Es handelt sich hierbei um einen Taschenrechner, bei dem auf Knopfdruck ein Mikroprozessor einen zuvor eingegebenen Währungsbetrag umrechnet und auf dem vorhandenen Display anstelle des Ausgangswertes ausgibt. Der Benutzer muß dabei je nachdem, von welcher Währung aus er umrechnen will, eine der beiden vorgesehenen Umrechnungstasten drücken, um die Umrechnung durchzuführen. Später ist jedoch nicht mehr nachzuvollziehen, welche der Tasten gedrückt wurde, so daß eventuelle Fehler nicht erkannt werden bzw. nicht mehr nachvollziehbar ist, ob der Fehler beispielsweise auf dem irrtümlichen Drücken der falschen Taste oder auf einem falsch eingegebenen Ausgangswert beruht.

Ein anderer derartiger Taschenrechner ist aus der deutschen Offenlegungsschrift 36 16 748 A1 bekannt, der in seiner Funktionsweise dem oben genannten Taschenrechner gleicht. Wie bei dem eben genannten Taschenrechner weist der Taschenrechner eine Vielzahl von Funktionen bzw. Tasten auf, die den mit der Bedienung derartiger Geräte weniger vertrauten Benutzer verwirren können. So erfordert der Taschenrechner beispielsweise die Eingabe (Programmierung) entsprechender Umrechnungsfaktoren und weist zudem Tasten mit Mehrfachfunktionen, welche die Bedienung zusätzlich verkomplizieren.

Diese bekannten Taschenrechner weisen auch noch den weiteren Nachteil auf, daß sie relativ aufwendig in Konstruktion und Herstellung sind.

Der Erfindung liegt deshalb die Aufgabe zugrunde, eine möglichst kostengünstig herzustellende und einfach zu bedienende Vorrichtung zur Umrechnung von Wechselkursen zur Verfügung zu stellen.

Die Aufgabe wird, ausgehend von einer Vorrichtung gemäß dem Oberbegriff des Anspruchs 1, durch die im kennzeichnenden Teil des Anspruchs 1 angegebenen Merkmale gelöst.

Die Erfindung schließt dabei insbesondere die Erkenntnis ein, daß eine besonders einfach zu handhabende und übersichtliche Umrechnungsvorrichtung erhalten werden kann, wenn die Vorrichtung eine oder zwei fest vorgegebene Umrechnungskonstanten für die Umrechnung in beiden Richtungen zwischen zwei Währungen aufweist, wobei im Falle zweier Umrechnungskonstanten die eine den Kehrwert der anderen bildet. Ist nur eine Umrechnungskonstante vorgesehen, erfolgt die Umrechnung durch Multiplikation und Division mit dieser bzw. durch diese Umrechnungskonstante. Sind Paare von Umrechnungskonstanten vorgesehen, erfolgt die Umrechnung entweder jeweils durch Multiplikation mit der entsprechenden der beiden Umrechnungskonstanten oder jeweils durch Division durch die entsprechende der beiden Umrechnungskonstanten.

Um die Vorrichtung trotzdem in großen Stückzahlen fertigen zu können, sind sämtliche Umrechnungsfaktoren zwischen Ländern der Währungsgemeinschaft und dem Euro fest vorgegeben und können bei der Herstellung durch einen nicht reversiblen Vorgang ausgewählt werden. Auf diese Weise lassen sich auch Varianten mit für alle Länder der Währungsgemeinschaft im Betrieb auswählbaren Umrechnungsfaktoren und solche mit fester Umrechnung durch einfache Manipulation aus einer Serie fertigen.

Die Umrechnungskonstanten sind dabei als Festwerte in einem Speicher festgehalten, bei dem die Auswahl einer von mehreren Umrechnungskonstanten bzw. eines von mehreren Paaren von Umrechnungskonstanten oder die Auswahl zwischen einer Betriebsmöglichkeit mit nur einer Umrechnungskonstanten bzw. einem Paar von Umrechnungskonstanten und einer Betriebsmöglichkeit, die eine Auswahl zwischen mehreren Betriebsmöglichkeiten einschließt, durch eine nicht umkehrbare Einwirkung erfolgt. Die nicht umkehrbare Einwirkung besteht dabei insbesondere in einem Zerstören von elektrischen Leiterbahnen, vorzugsweise durch Schmelzen infolge eines Stromflusses.

Bei einer anderen bevorzugten Ausführung besteht die nicht umkehrbare Einwirkung in einem permanenten galvanischen Verbinden von Leiterbahnen zum Erzeugen einer leitenden Brücke.

Für die Auswahl unterschiedlicher Umrechnungskonstanten bzw. unterschiedlicher Paare von Umrechnungskonstanten kommt dabei insbesondere ein mit der Leiteroberfläche einer Leiterplatte in Wechselwirkung tretender Gleit-, Dreh- oder Schiebeschalter in Betracht. Damit lassen sich unterschiedlichste Ausführungen durch einfaches Hinzufügen oder Weglassen von Einzelteilen aus einer Serie fertigen.

Bei einer anderen günstigen Ausführungsform sind für die Auswahl unterschiedlicher Umrechnungskonstanten bzw. unterschiedlicher Paare von Umrechnungskonstanten ein oder mehrere Tastschalter vorgesehen, durch welche einzelne in einem Speicher vorhandene Umrechnungskonstanten bzw. Paare von Umrechnungskonstanten einzeln aktivierbar sind.

Weiterhin ist es für die Übersichtlichkeit der Dartellung günstig, wenn die Ausgabeeinheit einen ersten Ausgabebereich und einen zweiten Ausgabebereich aufweist. Durch die Klarheit des Bedienkonzepts wird zum einen erreicht, daß Fehler bei der Eingabe ohne weiteres nachzuvollziehen sind, da die beiden einander durch die Umrechnung zugeordneten Werte einander unmittelbar gegenüberstehen und Tippfehler bei der Eingabe unmittelbar erkennbar sind.

Hierbei ist vorzugsweise die Ausgabesteuerung mit dem Ausgang der Auswahlsteuereinrichtung verbunden und gibt in Abhängigkeit von dessen Zustand den Inhalt des Eingangspufferspeichers im ersten Ausgabebereich und den Inhalt des Ausgangspufferspeichers im zweiten Ausgabebereich wieder oder umgekehrt. Hierbei ist dem ersten Ausgabebereich eine der ersten Währung entsprechende Kennzeichnung und dem zweiten Ausgabebereich eine der zweiten Währung entsprechende Kennzeichnung zugeordnet.

Bei einer anderen günstigen Ausführungsform überführt die Ausgabesteuerung den Inhalt des Eingangspufferspeichers in einen ersten Ausgabebereich und den Inhalt des Ausgangspufferspeichers in einen zweiten Ausgabebereich, wobei sie mit dem Ausgang der Auswahlsteuereinrichtung verbunden ist und in Abhängigkeit von dessen Zustand ein der Ausgangswährung entsprechendes Zeichen in ein erstes Anzeigefeld im ersten Ausgabebereich und ein der Zielwährung entsprechendes Zeichen in ein zweites Anzeigefeld im zweiten Ausgabebereich überführt.

Um auch unterschiedlichste Designvarianten durch Austausch von Gehäuseformen zu ermöglichen, sind vorteilhafterweise sämtliche Bedien- und Funktionselemente an einer erste Verbindungsmittel aufweisenden Frontbaugruppe angebracht, so daß die im übrigen keine geschlossene rückwärtige Gehäuseabdeckung aufweisende Frontbaugruppe mit den Bedien- und Funktionselementen wahlweise in unterschiedlich geformte aber übereinstimmende zweite Verbindungsmittel aufweisende Gehäuseschalen einfügbar ist.

Dabei bestehen dann vorzugsweise die ersten und zweiten Verbindungsmittel aus, insbesondere im Bereich der Gehäuseinnenwandung bzw. der Außenkante der Frontbaugruppe umlaufenden, Rastmitteln zum gegenseitigen Eingriff.

Vorteilhaft ist es ferner, wenn die Frontbaugruppe einstückig aus einem gummiartigen Elastomermaterial gefertigt ist, welches insbesondere Tastenmittel umfaßt.

Zur einfachen Montage ist es günstig, wenn das erste und zweite Verbindungsmittel eine umlaufende Rastung umfassen.

Der Aufbau der erfindungsgemäßen Vorrichtung aus besonders einfachen elektronischen Bauelementen ermöglicht eine besonders einfache und wirtschaftliche Herstellung. Hierdurch kann ein sehr geringer Anschaffungspreis realisiert werden, wodurch die Vorrichtung auch in Relation zu der zeitlich begrenzten Gebrauchsdauer erschwinglich ist und sich beispielsweise auch für den Einsatz als Werbegeschenk o.ä. eignet.

Bei einer vorteilhaften Weiterbildung der erfindungsgemäßen Vorrichtung ist die Betätigungseinrichtung zum Starten der Umrechnung von Mitteln zur Erfassung einer Betätigung der Eingabeeinheit gebildet. Mit jeder Tastatureingabe wird somit eine Umrechnung bewirkt, so daß sich die Betätigung einer Betätigungstaste für die Umrechnung erübrigt. Die Bedienung der Vorrichtung wird dadurch erheblich vereinfacht und beschleunigt.

Insbesondere ist bei einer bevorzugten Ausführungsvariante ein rücksetzbarer Summenspeicher vorgesehen, welcher selbsttätig alle eingegebenen Umrechnungen einer Umrechnungsrichtung addiert, so daß eine einfache Summierungsfunktion gegeben ist, wobei der Summenspeicher durch das Betätigen einer entsprechenden Taste rücksetzbar ist. Die Anzeige der Summenspeicher-Ergebnisse erfolgt durch Umschalten zwischen Summen- und Einzelspeicher mit einer entsprechenden Taste. Auch hier bleiben die Vorteile der Gegenüberstellung von Ausgangs- und Zielwährung erhalten. Hierbei kann die Summierung sogar bei Wechsel der Eingaberichtung fortgesetzt werden. Auf diese Weise können Zielbeträge durch Berücksichtigung beider Währungen ermittelt oder abgeschätzt werden. Bei einer alternativen Ausführungsform kann aber auch mit der Neuauswahl der Umrechnungsrichtung ein Zurücksetzen des Summenspeichers bewirkt werden.

Weitere bevorzugte Ausführungen der erfindungsgemäßen Vorrichtung weisen ein zusammenklappbares Gehäuse auf. Um möglichst geringe Abmessungen im zusammengeklappten Zustand zu erzielen, sind dabei die elektronischen Bauteile der Vorrichtung in den zueinander klappbaren Gehäuseteilen verteilt. So können beispielsweise die Tastatur und die Recheneinheit in einem Gehäuseteil und die Anzeigeeinheit sowie weitere Funktionstasten in einem anderen Gehäuseteil angeordnet sein. Die Verbindung zwischen den elektronischen Bauteilen in den unterschiedlichen Gehäuseteilen erfolgt vorzugsweise über wenigstens ein flexibles Leiterband.

Bei einer anderen bevorzugten Ausführung stellt dieses flexible Leiterband zumindest im wesentlichen auch die mechanische Verbindung zwischen den zueinander klappbaren Gehäuseteilen dar. Das Leiterband besteht dabei aus zwischen nichtleitenden Kunststoff-Folien einlaminierten Leiterfolien und ist dabei vorzugsweise so ausgebildet, daß die darin enthaltenen elektrischen Verbindungsleitungen auch bei häufigem Auf- und Zuklappen der Vorrichtung nicht dadurch beschädigt werden, daß sie lokal zu stark geknickt werden, d. h. daß ein Krümmungsradius im Leiterband unterschritten wird, bei dem die enthaltenen elektrischen Verbindungsleitungen mechanisch zu stark beansprucht werden. Hierzu kann das Leiterband beispielsweise von in einer entsprechend dicken Kunststoffschicht eingebetteten oder mit einem entsprechenden flexiblen Schutzüberzug versehenen Leiterbahnen gebildet sein. Es können aber auch Schutzelemente auf dem Leiterband angeordnet sein, die ein zu starkes Knicken der Leiterbahnen verhindern. Insbesondere besteht diese gegebenenfalls aus einer zusätzlichen Kunststoffschicht, welche an den beim Schließen des Gehäuses außen gelegenen Bereichen eine der übrigen Gehäuseoberfläche angepaßte Strukturierung oder Farbgebung aufweist.

Wie bereits oben erwähnt, kann die erfindungsgemäße Vorrichtung vorteilhafterweise austauschbar in unterschiedlichen Gehäusen angeordnet werden, indem sämtliche elektronischen Bauteile auf einem gemeinsamen Träger angeordnet sind, der in eine entsprechende Ausnehmung des Gehäuses eingesetzt werden kann. Bei der Verwendung von zwei Gehäusehalbschalen können dies auch zwei getrennte über ein Leiterband verbundene Träger sein. Die gegenseitigen Anschlußmittel sind dabei so ausgebildet, daß ein Einbringen des Trägers jeweils auf einfache Weise - beispielsweise durch Einrasten - möglich ist.

Da sämtliche elektronischen, Bedienungs- und Anzeigebaugruppen mit Ausnahme des Gehäuses eine (oder zwei) Einheiten bilden, kann auf diese Weise unterschiedlichen Anforderungen an die Gehäuseform schnell Rechnung getragen werden. Diese Vorrichtungen eignen sich dann besonders gut für Werbezwecke, da bei der Gestaltung der Gehäuse dann größtmögliche Freiheit gewährleistet ist, die es dem Werbenden beispielsweise ermöglicht, das Gehäuse in Form seines Firmenlogos zu gestalten. Auch die Herstellung ist vereinfacht, da in der Endmontage lediglich die vorgefertigten Funktionsbaugruppen in das jeweilige Gehäuse eingefügt werden müssen. Die Baugruppen weisen dabei selbst kein die elektronischen und Funktions-Einzelkomponenten gemeinsam umschließenden Gehäuse auf.

Durch die Freiheit der Auswahl unterschiedlicher Gehäuseformen können diese auch unterschiedlichen Anwendungszwekken in günstiger Weise angepaßt werden. So können an der Rückseite bei unterschiedlichen Ausführungen jeweils besondere Clips zur Befestigung an der Armbanduhr oder ein Magnet für die Anbringung am Armaturenbrett oder ein doppelseitiger Klebestreifen bzw. ein Klettband angebracht sein. Auf Reisen kann die Vorrichtung mit einer kleinen Reisetasche, der Brieftasche oder dem Portemonnaie bzw. einer Aufbewahrungstasche für Kreditkarten verbunden sein. Mittels einer Schlaufe kann sie auch nach Art eines Amuletts um den Hals getragen werden.

Bei anderen günstigen Weiterbildungen der Erfindung ist es vorgesehen, daß beim Einschalten der Vorrichtung auf der Anzeigeeinheit eine Information, wie beispielsweise ein kurzer Bedienungshinweis oder aber auch eine Werbebotschaft dargestellt wird.

Bei weiteren vorteilhaften Ausführungen weist die Vorrichtung die Additionsfunktion herkömmlicher Taschenrechner auf, und vorzugsweise auch die Subtraktionsfunktion sowie die Multiplikations- und Divisionsfunktion.

Es ist ersichtlich, daß sämtliche Ausführungsvarianten dem gemeinsamen Ziel förderlich sind, eine einfach zu bedienende Währungsumrechnungsvorrichtung zu schaffen, welche in Großserienfertigung aus einer einheitlichen Grundserie abgeleitet werden kann. Dabei kommt das Ziel der einfachen Bedienbarkeit durch Weglassung von verwirrenden Eingabeelementen dem Ziel der rationellen Fertigungsmöglichkeit entgegen.

Andere vorteilhafte Weiterbildungen der Erfindung sind in den Unteransprüchen gekennzeichnet bzw. werden nachstehend zusammen mit der Beschreibung bevorzugter Ausführungen der Erfindung anhand der Figuren näher dargestellt. Es zeigen:
- Figur 1: ein Blockschaltbild einer ersten Ausführung der Erfindung,
- Figur 1a: ein Blockschaltbild einer weiteren Ausführung der Erfindung,
- Figur 2: ein Blockschaltbild einer Variante zu der ersten Ausführung der Erfindung,
- Figur 3: ein Blockschaltbild eines Details zu der Ausführung gemäß Fig. 1,
- Figur 4: eine erste Ausführung der Erfindung gemäß Figur 1 in perspektivischer Außenansicht,
- Figur 5: eine Draufsicht auf die Variante gemäß Figur 2 in Außenansicht,
- Figur 6: eine Draufsicht auf eine weitere alternative Ausführungsvariante zu der Lösung gemäß Figur 5,
- Figur 7: die Ausführung der Erfindung gemäß Figur 6 in Seitenansicht,
- Figur 8: eine Schnittansicht einer bevorzugten Weiterbildung der Erfindung,
- Figur 8a: eine Schnittansicht der Weiterbildung der Erfindung aus Figur 8 im zusammengeklappten Zustand,
- Figur 9: eine Variante der Ausführung gemäß Figur 8 in perspektivischer Darstellung,
- Figur 10: eine andere Variante der Ausführung gemäß Figur 8 in perspektivischer Darstellung,
- Figur 11: eine weitere Ausgestaltung der erfindungsgemäßen Vorrichtung in perspektivischer Darstellung,
- Figur 12: eine andere bevorzugte Ausführung in perspektivischer Darstellung,
- Figur 13: eine alternative Ausführung der erfindungsgemäßen Vorrichtung,
- Figur 14: ein Blockschaltbild einer anderen Realisierungsform der Erfindung,
- Figur 15: eine Variante der erfindungsgemäßen Vorrichtung gemäß Figur 14,
- Figur 16: ein Blockschaltbild einer ersten Variante der in Figur 1 dargestellten Ausführung,
- Figur 16a: ein Blockschaltbild einer weiteren Variante der in Figur 1 dargestellten Ausführung,
- Figur 17: eine Draufsicht auf eine Ausgestaltung der Ausführung gemäß Figur 16,
- Figur 18: eine Seitenansicht der Ausführung gemäß Figur 17 im Teilschnitt.

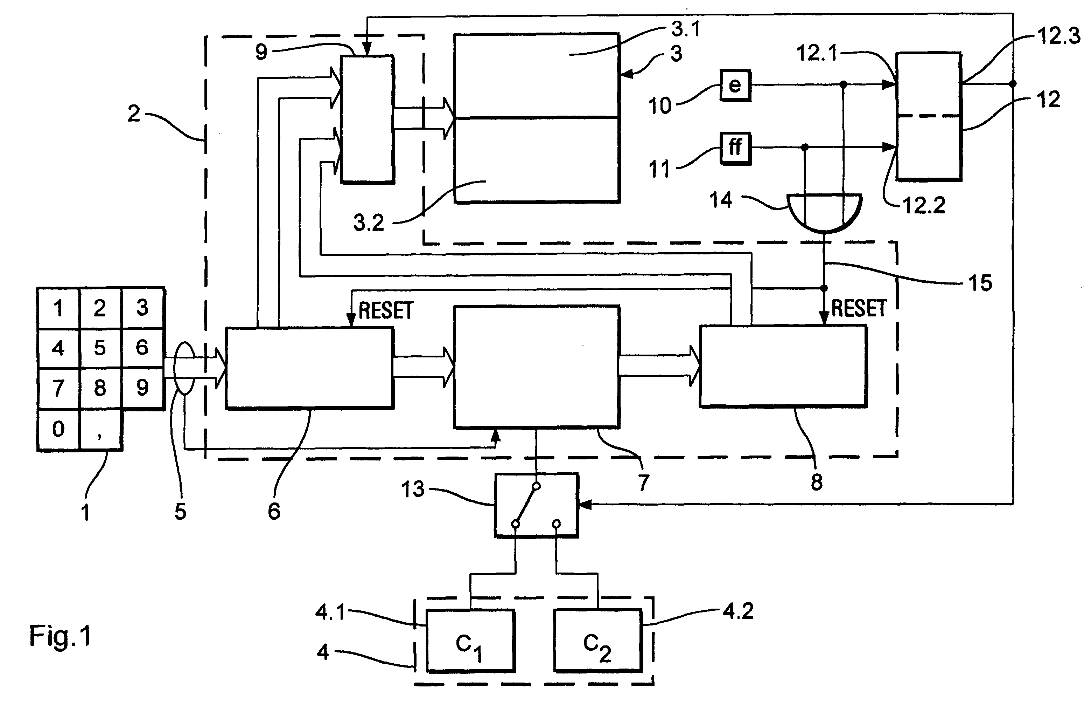

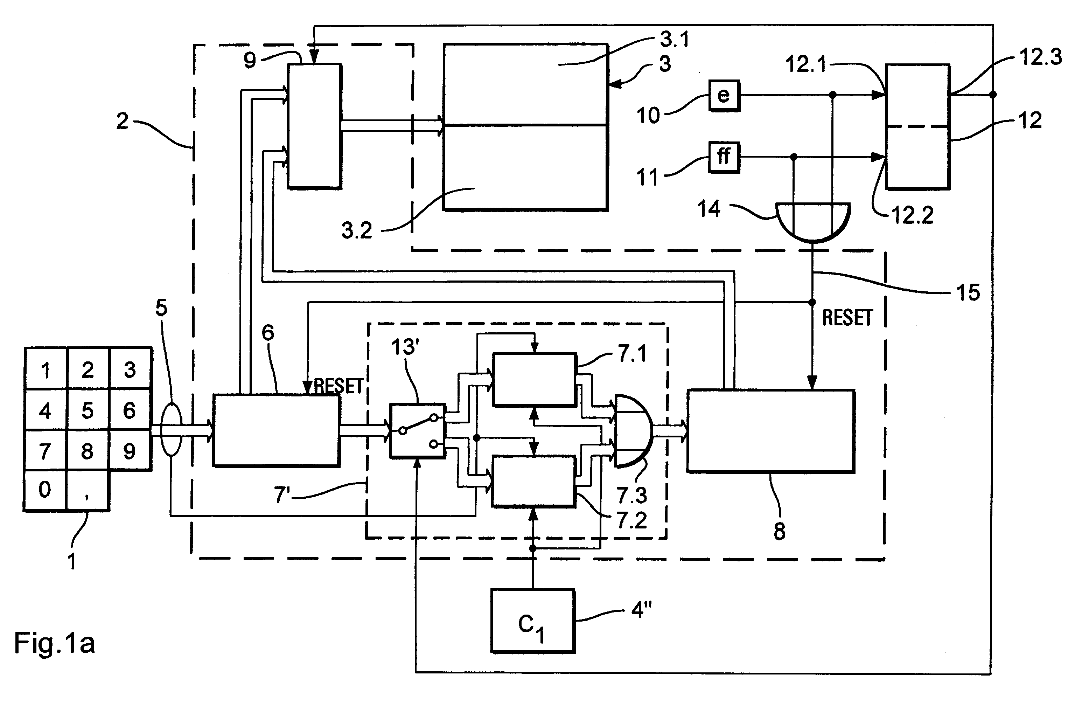

Figur 1 zeigt das Blockschaltbild einer ersten Ausführung der Erfindung mit einer Eingabeeinheit 1, einer Verarbeitungsbaugruppe 2, einer Anzeigeeinheit 3, die einen ersten Anzeigebereich 3.1 und einen zweiten Anzeigebereich 3.2 für Währungsbeträge aufweist, einem Konstantenspeicher 4 für die Umrechnungskonstanten C₁ und C₂ und einem Betätigungselement 5 zum Starten Ausführung der Umrechnung.

Die Eingabeeinheit besteht aus einer Tastatur 1 mit den Ziffern von 0 bis 9, wie sie beispielsweise von Taschenrechnern her bekannt ist. Derartige Tastaturen können in bekannter Weise als Gummitastatur oder im Hinblick auf möglichst geringe Baugröße und wirtschaftliche Herstellbarkeit zweckmäßig als Folientastatur ausgebildet sein. Derartige Tastaturen erzeugen an Ausgängen, welche bevorzugt matrixartig organisiert sind eine Widerstandserniedrigung, welche an entsprechenden Eingängen einer nachgeschalteten Verarbeitungsbaugruppe 2 einen Steuerimpuls hervorruft.

Die Verarbeitungsbaugruppe 2 umfaßt einen Eingangspufferspeicher 6, eine nachgeschaltete Recheneinheit 7, einen mit dem Ausgang der Recheneinheit 7 verbundenen Ausgangsspeicher 8 und eine Ausgabesteuereinheit 9, die sowohl zu dem Eingangspufferspeicher 6 als auch zu dem Ausgangsspeicher 8 eine Verbindung aufweist. Mit dem Eingangspufferspeicher ist ein Schieberegister verbunden, so daß die einzeln eingegebenen Ziffern zunächst in der niedrigstwertigen Stelle erscheinen. Die Eingabe einer nachfolgenden Ziffern verschiebt die bisher eingegebenen Ziffern in die nächst höherwertige Position.

Weiterhin sind zwei Auswahlelemente 10 und 11 vorgesehen, mit denen die Eingabewährung festgelegt wird, von der aus der eingegebene Betrag in die Zielwährung umgerechnet werden soll. Während das erste Auswahlelement 10 mit dem Eingang 12.1 einer Auswahlsteuereinrichtung 12 in Form eines Flip-Flops verbunden ist, ist das zweite Auswahlelement 11 mit dem Eingang 12.2 der Auswahlsteuereinrichtung 12 verbunden. Je nachdem, welches der beiden Auswahlelemente 10, 11 zuletzt betätigt wurde, liegt am Ausgang 12.3 der Auswahlsteuereinrichtung 12 ein vorbestimmter Signal zustand an.

Zusätzlich ist eine Auswahlschaltung 13 vorgesehen, die mit dem Ausgang 12.3 der Auswahlsteuereinrichtung 12 verbunden ist und je nach am Ausgang 12.3 anliegendem Zustand eine Verbindung zwischen der Recheneinheit 7 und dem ersten Speicherbereich 4.1 des Konstantenspeichers 4 oder dem zweiten Speicherbereich 4.2 des Konstantenspeichers 4 herstellt. Während im ersten Speicherbereich 4.1 eine Konstante C₁ zur Umrechnung von einer ersten Währung in eine zweite Währung abgelegt ist, befindet sich im zweiten Speicherbereich 4.2 eine Konstante C₂ zur Umrechnung von der zweiten Währung in die erste Währung. Sämtliche Konstanten sind in der vorliegenden Schaltung in Festwertspeichern vorgegeben und können nicht verändert werden. Es ist lediglich eine Auswahl bei der Herstellung - oder gegebenenfalls auch nachträglich - möglich. Letzteres wird weiter unten beschrieben werden. Im Hinblick auf eine möglichst einfache und rationelle Herstellung entfällt dabei jegliche Programmierbarkeit im Sinne einer nachträglichen Veränderung von Umrechnungskonstanten in RAM-Speichern. Das Gerät ist deshalb auch jederzeit ohne besondere Eingaben von Umrechnungsfaktoren betriebsbereit.

Die Recheneinheit 7 ist bei der dargestellten Ausführung als einfache Multiplizierschaltung ausgebildet, der den Inhalt des Eingangspufferspeichers 6 mit derjenigen Konstante C₁ bzw. C₂ multipliziert, die in dem Speicherbereich 4.1 bzw. 4.2 gespeichert ist, mit dem die Recheneinheit 7 über die Auswahlschaltung 13 verbunden ist. Das Ergebnis dieser Multiplikation wird dann in den Ausgangsspeicher 8 geschrieben. Das Betätigungselement 5 bestimmt dabei den Zeitpunkt, zu dem eine Multiplikation des Inhalts des Eingangspufferspeichers 6 mit der entsprechenden Konstante C₁ bzw. C₂ erfolgt.

Im gezeigten Ausführungsbeispiel ist das Betätigungselement 5 ein Teil der Tastatur 1. Mit jeder Betätigung der Tastatur 1 wird daher der aktuelle Inhalt des Eingangspufferspeichers 6 mit der entsprechenden Konstante C₁ bzw. C₂ multiplizert und das Ergebnis in den Ausgangsspeicher 8 geschrieben. Eine gesonderte Betätigung einer Eingabetaste, die die gewünschte Umrechnung auslöst, ist damit nicht erforderlich, so daß sich eine besonders einfache Bedienung der Vorrichtung ergibt.

Um eingegebene Zahlen zu löschen und neue Umrechnungen durchführen zu können, sind die Auswahlelemente 10 und 11, verknüpft über eine ODER-Schaltung 14, jeweils mit dem Eingangspufferspeicher 6 und dem Ausgangsspeicher 8 verbunden, so daß bei jeder Betätigung eines der beiden Auswahlelemente 10, 11 der Inhalt der beiden Puffer 6 und 8 auf Null zurückgesetzt wird.

Die Ausgabesteuereinheit 9 stellt den Inhalt des Eingangspufferspeichers 6 und den Inhalt des Ausgangsspeichers 8 auf der Anzeigeeinheit dar, die von einem LCD-Display 3 gebildet ist, das in einen ersten Anzeigebereich 3.1 und einen zweiten Anzeigebereich 3.2 unterteilt ist. Jedem der beiden Anzeigebereiche 3.1, 3.2 ist bei dieser Ausführung eine feste Währung zugeordnet. So ist dem ersten Anzeigebereich 3.1 eine erste Währung, beispielsweise EURO, und dem zweiten Anzeigebereich 3.1 eine zweite Währung, beispielsweise Französische Francs, zugeordnet. Diese Zuordnung kann beispielsweise durch Anbringung eines entsprechenden Währungssymbols über bzw. unter oder neben den Anzeigebereichen 3.1, 3.2 des LCD-Displays 3 erfolgen. Es können zu diesem Zweck aber auch die entsprechend gekennzeichneten ersten und zweiten Auswahlelemente 10 und 11 derart angeordnet sein. Bei dieser Ausführung ist die Eingabe und Währungszuordnung besonders übersichtlich, da jede Währung im Display ihren festen Platz hat. Die Auswahl der Eingabewährung erfolgt durch Betätigung derjenigen Taste, die mit der Eingabewährung gekennzeichnet ist. Danach kann unmittelbar die Eingabe erfolgen und es wird auch gleich ein Zielwährungsbetrag angezeigt. Für die nächste Eingabe ist lediglich wieder die Auswahltaste zu betätigen. Einfacher kann die Handhabung nicht sein.

Die Ausgabesteuereinheit 9 ist mit dem Ausgang 12.3 der Auswahlsteuerung verbunden und stellt je nachdem, welches der beiden Auswahlelemente 10, 11 zuletzt betätigt wurde, d.h. je nachdem, welcher Zustand am Ausgang 12.3 anliegt, den Inhalt des Eingangspufferspeichers 6 auf dem ersten Anzeigebereich 3.1 und den Inhalt des Ausgangsspeichers 8 auf dem zweiten Anzeigebereich 3.2 dar oder umgekehrt.

Im folgenden wird der Ablauf eines Umrechnungsvorganges mit der in Figur 1 dargestellten Ausführung der Erfindung erläutert. Wurde beispielsweise die erste Währung durch Betätigen des ersten Auswahlelements 10 als Eingabewährung ausgewählt, so werden zunächst über die Verbindungsleitung 15 der Eingangspufferspeicher 6 und der Ausgangsspeicher 8 auf den Ausgangswert Null gesetzt. Gleichzeitig wird der Ausgang 12.3 der Auswahlsteuereinrichtung 12 auf einen dieser Auswahl entsprechenden Zustand gesetzt. Hierdurch wird die Auswahlschaltung 13 geschaltet, so daß die Recheneinheit 7 mit dem ersten Speicherbereich 4.1 verbunden ist. In dem ersten Speicherbereich 4.1 ist die Konstante C₁ gespeichert, mit der ein Wert in der ersten Währung multipliziert werden muß, um einen entsprechenden Wert in der zweiten Währung zu erhalten. Ebenso wird hierdurch die Ausgabesteuereinrichtung 9 so geschaltet, daß sie den Inhalt des Eingangspufferspeichers 6 auf dem ersten Anzeigebereich 3.1 und den Inhalt des Ausgangsspeichers 8 auf dem zweiten Anzeigebereich 3.2 darstellt. Die Zahleneingabe über die Tastatur 1 schreibt die entsprechenden Werte in den Eingangspufferspeicher 6, der als Schieberegister ausgebildet ist, so daß die zuvor eingegebenen Ziffern mit jeder Tastatureingabe um jeweils eine Stelle auf dem ersten Anzeigebereich 3.1 nach links verschoben werden. Die Betätigungseinrichtung 5 bewirkt, daß die Recheneinheit 7 mit jeder Tastatureingabe den Inhalt des Eingangspufferspeichers 6 mit der Konstante C₁ multipliziert und das Ergebnis der Multiplikation in den Ausgangsspeicher 8 schreibt, dessen Inhalt dann von der Ausgabesteuereinheit 9 auf dem zweiten Anzeigebereich 3.2 dargestellt wird. Mit jeder Eingabe durch die Tastatur 1 wird somit ein der bisher eingegebenen Ziffernfolge entsprechender Wert in der ersten Währung auf den ersten Anzeigebereich 3.1 und gleichzeitig dessen Pendant in der zweiten Währung auf dem zweiten Anzeigebereich 3.2 dargestellt.

Soll beispielsweise der Gegenwert von 150 EURO in Französischen Francs ermittelt werden, so müssen die Ziffern 1, 5 und 0 über die Tastatur 1 eingegeben werden. Nach Eingabe der Ziffer 1 erscheint im ersten Anzeigebereich 3.1 die Zahl 1 und im zweiten Anzeigebereich der entsprechende Gegenwert in Französischen Francs, bei einem Umrechnungskurs von 100 EURO entsprechend 675 FF also die Zahl 6,75. Nach Eingabe der Ziffer 5 erscheint im ersten Anzeigebereich 3.1 die Zahl 15 und im zweiten Anzeigebereich die Zahl 101,25. Nach Eingabe der Ziffer 0 erscheint im ersten Anzeigebereich 3.1 die Zahl 150 und im zweiten Anzeigebereich die Zahl 1012,50.

Wird nunmehr das erste Auswahlelement 10 erneut betätigt, so werden der Eingangspufferspeicher 6 und der Ausgangsspeicher 8 wieder auf Null zurückgesetzt, so daß eine neue Zahl eingegeben werden kann. Wird hingegen das zweite Auswahlelement 11 betätigt, so werden zusätzlich zur Rücksetzung der beiden Puffer 6 und 8 auch die Auswahlschaltung 13 und die Ausgabesteuereinheit 9 umgeschaltet. Die Recheneinheit 7 ist dann mit dem zweiten Speicherbereich 4.2 verbunden und die Ausgabesteuereinheit stellt dann den Inhalt des Eingangspufferspeichers 6 auf dem zweiten Anzeigebereich 3.2 und den Inhalt des Ausgangsspeichers 8 auf dem ersten Anzeigebereich 3.1 dar.

Figur la zeigt das Blockschaltbild einer Ausführung der Erfindung, die im wesentlichen der Ausführung aus Figur 1 entspricht, so daß hier lediglich auf die Unterschiede eingegangen werden soll.

Dieser Unterschied besteht darin, daß die Recheneinheit 7' eine Multipliziereinheit 7.1 und eine Dividiereinheit 7.2 umfaßt, die über Umschaltvorrichtung 13' mit dem Eingangspufferspeicher 6 verbunden sind. Die Umschaltvorrichtung 13' ist dabei mit dem Ausgang 12.3 der Auswahlsteuereinrichtung 12 verbunden. In Abhängigkeit vom Zustand am Ausgang 12.3 der Auswahlsteuereinrichtung 12 ist somit der Eingangspufferspeicher 6 mit der Multipliziereinheit 7.1 oder der Dividiereinheit 7.2 verbunden. Die Ausgänge der Multipliziereinheit 7.1 und die Dividiereinheit 7.2 sind weiterhin über eine ODER-Schaltung 7.3 verknüpft mit dem Ausgangsspeicher 8 verbunden.

Die Multipliziereinheit 7.1 und die Dividiereinheit 7.2 sind jeweils mit dem Speicher 4" verbunden, in dem eine Umrechnungskonstante C₁ für die Umrechnung zwischen der ersten und der zweiten Währung gespeichert ist. Weiterhin sind die Steuereingänge der Multipliziereinheit 7.1 und der Dividiereinheit 7.2 jeweils mit der Auslöseeinheit 5 verbunden. Je nach Schaltstellung der Umschaltvorrichtung 13' greift die mit dem Eingangspufferspeicher 6 verbundene Multipliziereinheit 7.1 bzw. die Dividiereinheit 7.2 gesteuert von der Auslöseeinheit 5 auf die im Speicher 4" vorhandene Umrechnungskonstante C₁ zu und multipliziert bzw. dividiert den Inhalt des Eingangspufferspeichers 6 mit dieser bzw. durch diese Umrechnungskonstante C₁ und legt den Ergebniswert im Ausgangsspeicher 8 ab. Da die Auslöseeinheit 5, wie zu Figur 1 beschrieben, bei jeder Zifferneingabe durch die Eingabeeinheit 1 betätigt wird, erfolgt auch hier mit jeder Zifferneingabe eine entsprechende Multiplikation bzw. Division des Inhalts des Eingangspufferspeichers 6 mit der bzw. durch die Umrechnungskonstante C₁.

Bei dieser Variante wird somit die Umrechnung zwischen zwei Währungen je nach Umrechnungsrichtung durch Multiplikation bzw. Division mit einer einzigen Umrechnungskonstante C₁ durchgeführt. Die Umrechnung erfolgt hier wie auch bei den anderen Ausführungsbeispielen vorzugsweise mit auf sechs signifikante Stellen genauen Umrechnungskonstanten C₁ bzw. C₁ und C₂.

Die Umrechnung mit einer einzigen Umrechnungskonstante C₁ gemäß dem Ausführungsbeispiel aus Figur la stellt eine gleichwertige Alternative zu der Umrechnung mit zwei Umrechnungskonstanten C₁ und C₂. gemäß dem Ausführungsbeispiel aus Figur 1 dar. Sofern in den folgenden Beispielen auf die Umrechnung mit zwei Umrechnungskonstanten C₁ und C₂ Bezug genommen wird, versteht es sich, daß diese Währungsumrechnung ebensogut mit der Variante mit einer einzigen Umrechnungskonstante C₁ realisiert werden kann.

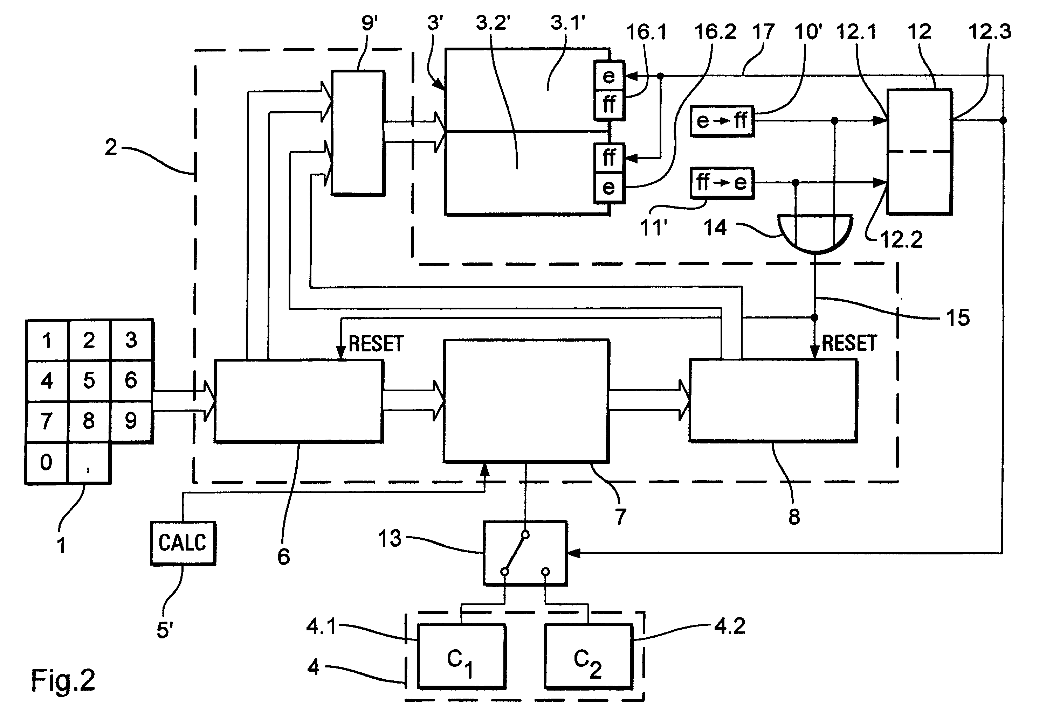

Figur 2 zeigt ein Blockschaltbild einer anderen Ausführungsform der Erfindung. Diese stimmt in den meisten Elementen und deren Funktionsweise mit den aus der Figur 1 bekannten Elementen überein. Übereinstimmende Elemente wurden daher mit denselben Bezugsziffern versehen. Es sollen hier lediglich die Unterschiede zur Ausführung aus Figur 1 erläutert werden, auf eine Beschreibung identischer Elemente und Funktionsweisen wird daher verzichtet.

Bei dieser Ausführung der Erfindung stellt die Ausgabesteuereinheit 9' stets den Inhalt des Eingangspufferspeichers 6 auf dem ersten Anzeigebereich 3.1' dar und den Inhalt des Ausgangsspeichers 8 stets auf dem zweiten Anzeigebereich 3.2'. Zur Kenntlichmachung, um welche Währung es sich bei der im ersten Anzeigebereich 3.1' dargestellten Eingabewährung und der im zweiten Anzeigebereich 3.2' dargestellten Zielwährung handelt, sind auf der Anzeigeeinrichtung 3' im Bereich des ersten Anzeigebereichs 3.1' eine erste Anzeige 16.1 und im Bereich des zweiten Anzeigebereichs 3.2' eine zweite Anzeige 16.2 vorgesehen. Diese Anzeigen 16.1, 16.2 sind über eine Verbindungsleitung 17 mit dem Ausgang 12.3 der Auswahlsteuereinrichung 12 verbunden. Je nachdem, welches der beiden Auswahlelemente 10', 11' zuletzt betätigt wurde, liegt am Ausgang 12.3 der Auswahlsteuereinrichung 12 ein bestimmter Zustand an. In Abhängigkeit vom Zustand am Ausgang 12.3 wird in der Anzeige 16.1 ein der ausgewählten Eingabewährung zugeordnetes Währungszeichen oder Symbol dargestellt und in der Anzeige 16.2 ein der Zielwährung entsprechendes Währungszeichen oder Symbol.

Wurde beispielsweise durch Betätigen des ersten Auswahlelements 10' eine Umrechnung von einer ersten Währung in eine zweite Währung, z. B. von EURO in Französische Francs ausgewählt, so erscheint in der ersten Anzeige 16.1 das der ersten Währung zugeordnete Währungszeichen, also ein "e" für EURO, und in der zweiten Anzeige 16.2 das der zweiten Währung zugeordnete Währungszeichen, also ein "FF" für Französische Francs. Wurde jedoch durch Betätigen des zweiten Auswahlelements 11' eine Umrechnung von der zweiten Währung in die erste Währung, also von Französischen Francs in EURO ausgewählt, so erscheint in der ersten Anzeige 16.1 das der zweiten Währung zugeordnete Währungszeichen, also ein "FF" für Französische Francs, und in der zweiten Anzeige 16.2 das der ersten Währung zugeordnete Währungszeichen, also ein "e" für EURO.

Weiterhin ist bei der in Figur 2 gezeigten Ausführung die Betätigungseinrichtung von einer Betätigungstaste 5' gebildet. Wird die Betätigungstaste 5' betätigt, multipliziert die Recheneinheit 7 den Inhalt des Eingangspufferspeichers 6 mit dem Wert der Konstante C₁ bzw. C₂, die in dem Speicherbereich 4.1 bzw. 4.2 gespeichert ist, mit dem die Recheneinheit 7 über die Umschaltvorrichtung 13 verbunden ist. Das Ergebnis wird dann in den Ausgangsspeicher 8 geschrieben und von der Ausgabesteuereinheit 9' auf dem zweiten Anzeigebereich 3.2' dargestellt. Solange die Betätigungstaste 5' nicht betätigt wird, wird somit auf dem zweiten Anzeigebereich 3.2' das Ergebnis der letzten Multiplikation bzw. vor erstmaligem Betätigen der Betätigungstaste 5' nach Betätigen eines der Auswahlelemente 10', 11' der Wert Null dargestellt.

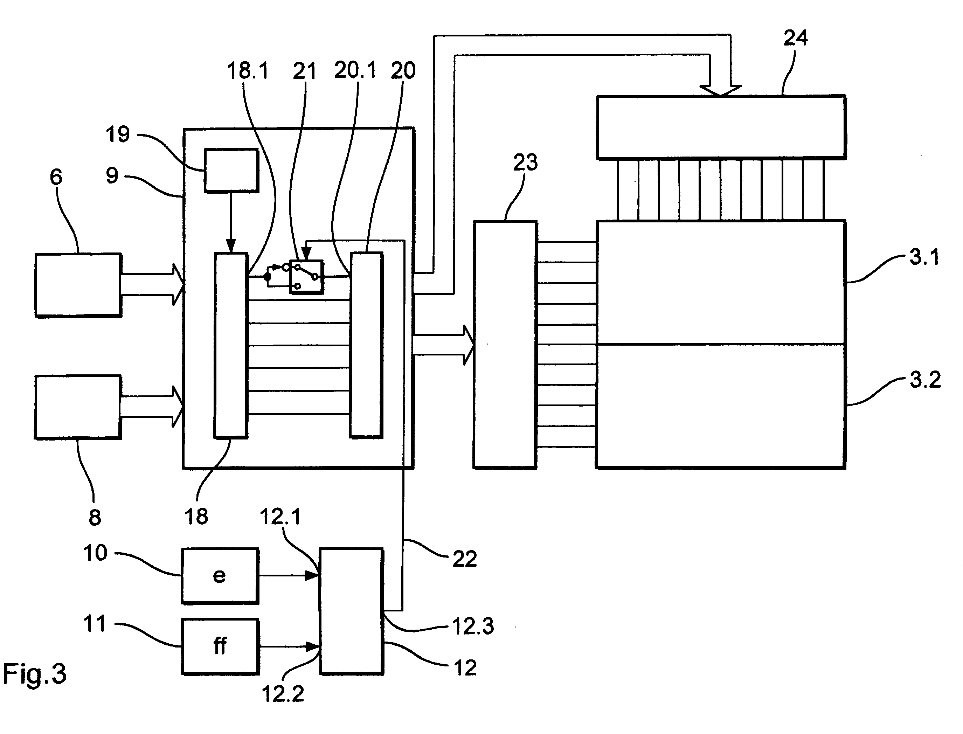

Figur 3 zeigt ein Blockschaltbild einer bevorzugten Ausführungsform der Ausgabesteuereinheit 9 und der Anzeigeeinheit 3 aus Figur 1. Aus Gründen der Übersichtlichkeit sind auch noch die mit der Ausgabesteuereinheit 9 verbundenen Puffer 6 und 8 und die Auswahlelemente 10, 11 sowie die Auswahlsteuereinrichtung 12 dargestellt.

Die Ausgabesteuereinrichtung 9 umfaßt bei dieser bevorzugten Ausführung einen Zähler 18, der mit einem Taktgeber 19 verbunden ist, einen Treiber 20 und einen umschaltbaren Inverter 21, über den ein Ausgang 18.1 des Zählers 18 mit einem Eingang 20.1 des Treibers 20 verbunden ist, und über den am Eingang 20.1 der Zustand am Ausgang 18.1 oder dessen invertierter Wert angelegt sein kann. Der umschaltbare Inverter 21 ist über die Leitung 22 mit dem Ausgang 12.3 der Auswahlsteuereinrichtung 12 verbunden und legt je nach Zustand am Ausgang 12.3 am Eingang 20.1 den Zustand am Ausgang 18.1 oder dessen invertierten Wert an.

Der Treiber 20 wandelt zyklisch wiederkehrend die an seinen Dateneingängen anliegenden Eingangssignale in die an den Horizontaleingängen 23 und Vertikaleingängen 24 des LCD-Displays 3 erforderlichen Signale um und sendet diese an die entsprechenden Eingänge 23, 24 des LCD-Displays 3.

Durch den umschaltbaren Inverter 21 wird beispielsweise das höchstwertige Bit des Treibers umgesetzt, wodurch sich eine Verschiebung in der zeitlichen Abarbeitung der Eingangssignale am Treiber ergibt. Wurde das Auswahlelement 10 betätigt, so ist der umschaltbare Inverter 21 so geschaltet, daß am Eingang 20.1 der Zustand am Ausgang 18.1 des Zählers anliegt. Die zeitliche Abarbeitung der Dateneingänge durch den Treiber 20 erfolgt dann derart, daß zunächst die Dateneingänge abgetastet werden, die mit dem Eingangspufferspeicher 6 verbunden sind, und dann die Dateneingänge abgetastet werden, die mit dem Ausgangsspeicher 8 verbunden sind. Auf dem LCD-Display 3 wird somit im ersten Anzeigebereich 3.1 der Inhalt des Eingangspufferspeichers 6 und im zweiten Anzeigebereich 3.2 Inhalt des Ausgangsspeichers 8 dargestellt.

Wurde hingegen das Auswahlelement 11 betätigt, so ist der umschaltbare Inverter 21 so geschaltet, daß am Eingang 20.1 der invertierte Zustand am Ausgang 18.1 des Zählers anliegt. Die zeitliche Abarbeitung der Dateneingänge durch den Treiber 20 ist dann derart verschoben, daß vom Treiber 20 zunächst die Dateneingänge abgetastet werden, die mit dem Ausgangsspeicher 8 verbunden sind, und dann die Dateneingänge abgetastet werden, die mit dem Eingangspufferspeicher 6 verbunden sind. Auf dem LCD-Display 3 wird somit im ersten Anzeigebereich 3.1 der Inhalt des Ausgangsspeichers 8 und im zweiten Anzeigebereich 3.2 Inhalt des Eingangspufferspeichers 6 dargestellt.

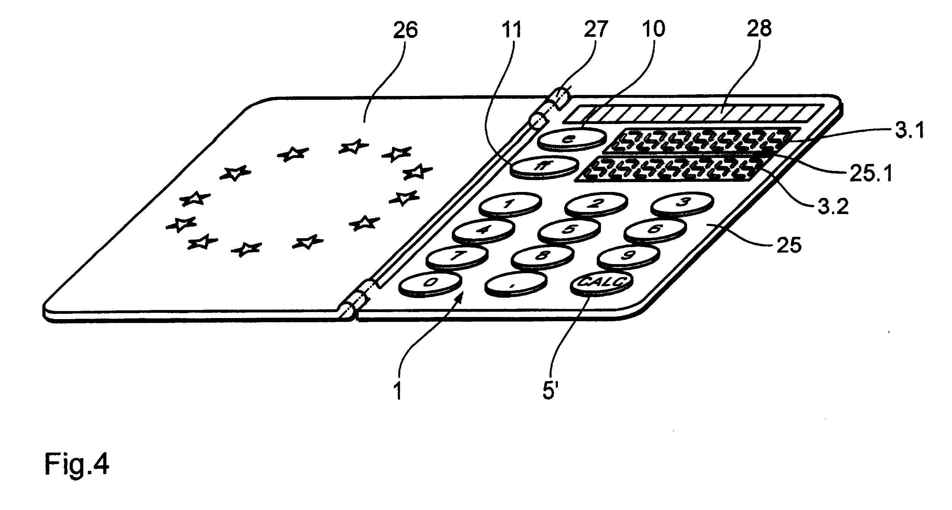

Figur 4 zeigt die perspektivische Ansicht einer Ausführung der erfindungsgemäßen Vorrichtung mit einem Gehäuse 25 und einem über Gelenke 27 schwenkbar daran angeordneten Deckel 26. Die Tastatur 1 sowie die Auswahlelemente 10 und 11 und die Betätigungstaste 5' sind als Gummi- oder Kunststofftastaturen ausgebildet und im Gehäuse 25 eingebettet. Sie sind mit ihren Funktionen entsprechenden Ziffern oder Symbolen gekennzeichnet. Das LCD-Display 3 ist ebenfalls im Gehäuse 25 eingebettet, wobei die beiden Anzeigebereiche 3.1 und 3.2 durch einen Gehäusesteg 25.1 optisch voneinander getrennt sind. Es versteht sich jedoch, daß die beiden Anzeigebereiche 3.1 und 3.2 auch von zwei getrennten Displays gebildet sein können. Die Anzeigebereiche 3.1 und 3.2 des LCD-Displays 3 können dabei mit einer Oberfläche versehen sein, die nach Art einer Lupe die dargestellte Anzeige vergrößert und so das Ablesen von den Anzeigebereichen 3.1 und 3.2 erleichtert.

Zur Spannungsversorgung ist ein ebenfalls im Gehäuse 25 eingebettetes Solarzellenfeld 28 vorgesehen, welches aus einer Serienschaltung photovoltaischer Elemente besteht. Durch die Versorgung mittels Solarzellen und eine entsprechend niedrige Dimemsionierung des Stromverbrauchs der Vorrichtung entsteht auch bei einer späteren Entsorgung keine Umweltbelastung durch schädliche Batteriebestandteile. Es versteht sich jedoch, daß bei anderen Varianten der Erfindung auch eine herkömmliche Energieversorgung, beispielsweise mit Batterien oder Akkumulatoren, oder eine Kombination dieser Varianten mit Solarzellen vorgesehen sein kann.

Im zusammengeklappten Zustand weist die Vorrichtung etwa die Größe einer herkömmlichen Scheckkarte auf. Es versteht sich aber, daß die Vorrichtung problemlos auch bedeutend kleiner ausgebildet sein kann, wodurch jedoch unter Umständen die Bedienung etwas erschwert wird, da sich Größe und Abstand der Tasten reduzieren.

Der Deckel sowie die Außenflächen des Gehäuses stehen als Informationsträger zur Verfügung. So können beispielsweise Bedienungshinweise oder auch Werbebotschaften o. ä. auf diesen Gehäusehalbschalen aufgebracht, z. B. aufgedruckt sein.

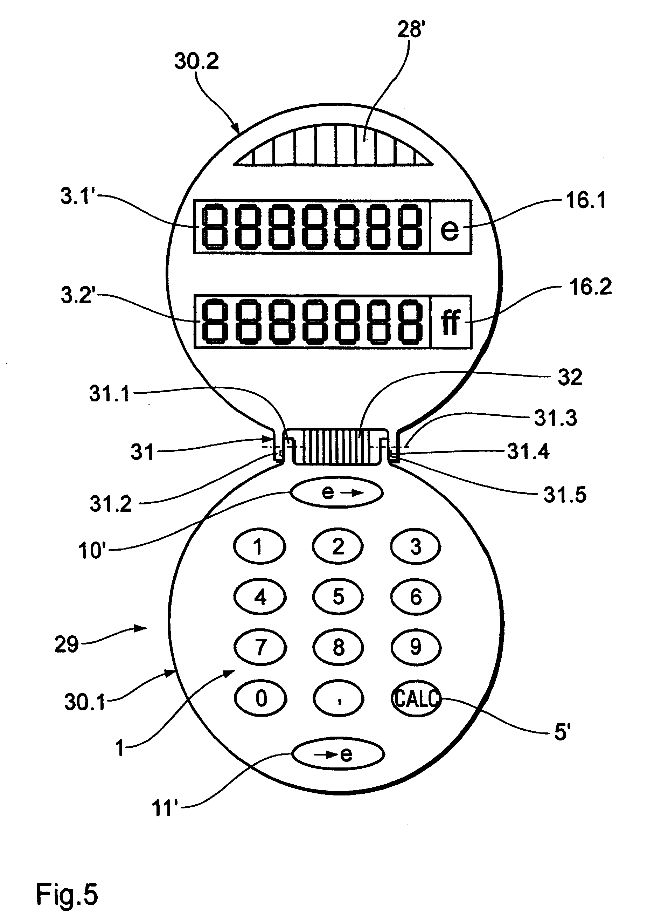

Figur 5 zeigt eine weitere Ausführung der erfindungsgemäßen Vorrichtung gemäß Figur 2 mit einem Gehäuse 29, das einen untere Gehäusehalbschale 30.1 und eine obere Gehäusehalbschale 30.2 aufweist. Die beiden Gehäusehalbschalen 30.1 und 30.2 sind über am Gehäuseunterteil 30.1 angeformte Gelenkelemente 31.1 und damit zusammenwirkende, am Gehäuseoberteil 30.2 angeformte Gelenkelemente 31.2 um eine Schwenkachse 31.3 schwenkbar miteinander verbunden. An den Gelenkelementen 31.2 sind Rastelemente 31.4 angeordnet, die in Rastnuten 31.5 in den Gelenkelementen 31.2 eingreifen können. Dabei sind in den Gelenkelementen 31.2 mehrere Rastnuten 31.5 derart verteilt angeordnet, daß die beiden Gehäusehalbschalen 30.1 und 30.2 Raststellungen bei einem relativen Winkel von 0°, d.h. im geschlossenen Zustand, bei einem Öffnungswinkel von ca. 100° und bei einem Öffnungswinkel von 180° aufweisen. Es versteht sich, daß die Rastnuten auch in anderer Anzahl und Winkelstellung angeordnet sein können. Damit ist die Vorrichtung entsprechend den Gegebenheiten in unterschiedlicher Konfiguration und Öffnungsstellung bequem handhabbar.

Beim Verdrehen der beiden Gehäusehalbschalen 30.1 und 30.2 zwischen diesen Rastpunkten lösen sich die Rastelemente 31.4 infolge der Elastizität der Gelenkelemente 31.1 und 31.2 aus den Rastnuten 31.5 und gleiten solange über die Gelenkelemente 31.2, bis sie in den Bereich der nächsten Rastnuten 31.5 gelangen und aufgrund der Elastizität der Gelenkelemente 31.1 und 31.2 in diese einrasten.

In der unteren Gehäusehalbschale 30.1 sind die Tastatur 1, die Auswahlelemente 10' und 11' sowie die Betätigungstaste 5' eingebettet, die als Folientastatur ausgebildet sind. In der oberen Gehäusehalbschale 30.2 sind die Anzeigebereiche 3.1' und 3.2' sowie die Anzeigefelder 16.1 und 16.2 und das Solarzellenfeld 28' angeordnet. Die übrigen Elemente der Vorrichtung, wie die Verarbeitungsbaugruppe 2, der Konstantenspeicher 4 etc. können entweder im Gehäuseunterteil 30.1 oder im Gehäuseoberteil 30.2 untergebracht sein, die einzelnen Elemente können selbstverständlich aber auch auf beide Gehäuseteile 30.1 und 30.2 verteilt sein. Die Verbindung zwischen den im Gehäuseunterteil 30.1 und den im Gehäuseoberteil 30.2 untergebrachten Vorrichtungselementen wird in besonders einfacher Weise durch ein flexibles Leiterband 32 hergestellt, das vorteilhafterweise einstückig mit der Folientastatur ausgebildet ist.

Das Einschalten der Vorrichtung erfolgt durch Betätigen eines der Auswahlelemente 10' bzw. 11'. Erst danach kann eine Zahleneingabe über die Tastatur 1 und ein Auslösen der Umrechnung durch die Betätigungstaste 5' erfolgen. Gleichzeitig werden in den Anzeigefeldern 16.1 und 16.2 entsprechend der getroffenen Auswahl die Währungssymbole der Eingabewährung und der Zielwährung angezeigt. Im gezeigten Fall wurde also das Auswahlelement 10' betätigt.

Es versteht sich, daß das Einschalten der Vorrichtung auch anderweitig erfolgen kann. So kann beispielsweise das Drücken einer beliebigen Taste, das Aufklappen der Vorrichtung, der Lichteinfall in das Solarzellenfeld o.ä. das Einschalten der Vorrichtung bewirken. Die Vorrichtung startet dann in einer Standardeinstellung, bei der die Umrechnung von einer ersten Währung in eine zweite Währung erfolgt, beispielsweise von EURO in Französische Francs. Soll in die andere Richtung umgerechnet werden ist dann zunächst noch das entsprechende Auswahlelement 11' zu betätigen, bevor eine Zahleneingabe erfolgt.

Die Abmessung der gezeigten Vorrichtung entsprechen im zusammengeklappten Zustand etwa denjenigen einer herkömmlichen Armbanduhr. Auf der Rückseite der unteren Gehäusehalbschale 30.1 kann eine Halterung angeordnet sein, die es ermöglicht, die Vorrichtung an einem Uhrenarmband zu befestigen. Es kann aber auch eine andere Befestigungseinrichtung, beispielsweise ein Magnet, ein Hakenelement o.ä. vorgesehen sein, um die Vorrichtung an geeigneten Gegenständen zu befestigen.

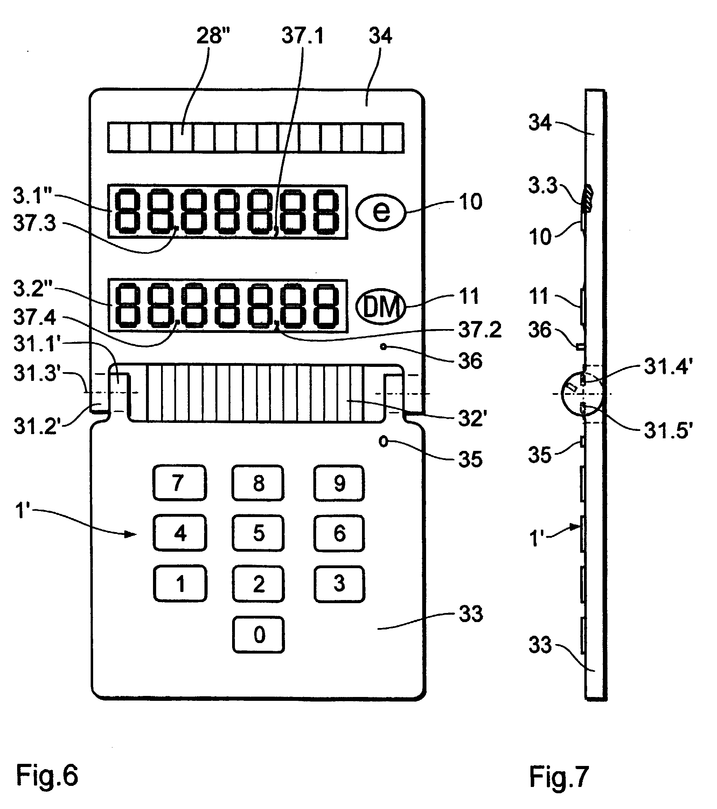

Die Figuren 6 und 7 zeigen eine weitere Ausführung der erfindungsgemäßen Vorrichtung, die im wesentlichen der Vorrichtung gemäß Figur 1 entspricht. Die Tastatur 1' ist in einer unteren Gehäusehalbschale 33 angeordnet, die mit einer oberen Gehäusehalbschale 34 über am Gehäuseunterteil 33 angeformte Gelenkelemente 31.1' und damit zusammenwirkende, am Gehäuseoberteil 34 angeformte Gelenkelemente 31.2' um eine Schwenkachse 31.3' schwenkbar verbunden ist.

An den Gelenkelementen 31.2' sind Rastelemente 31.4' angeordnet, die in Rastnuten 31.5' in den Gelenkelementen 31.2' eingreifen können und die wie zu Figur 5 beschrieben miteinander zusammenwirken.

In der oberen Gehäusehalbschale 34 sind die Anzeigebereiche 3.1" und 3.2", die Auswahlelemente 10 und 11 sowie das Solarzellenfeld 28" angeordnet. In der unteren Gehäusehalbschale 33 ist ein Schalter 35 angeordnet, auf den im zusammengeklappten Zustand der Vorrichtung ein am Gehäuseoberteil 34 angeformter Stift 36 derart einwirkt, daß die Vorrichtung abgeschaltet wird. Wird die Vorrichtung aufgeklappt, so löst sich der Stift 36 vom Schalter 35 und die Vorrichtung wird eingeschaltet.

Die in den beiden Gehäusehalbschalen 33 und 34 angeordneten Elemente der Vorrichtung sind über ein flexibles Leiterband 32' miteinander verbunden.

Die gezeigte Vorrichtung unterscheidet sich insofern von der Vorrichtung gemäß Figur 1, als die Tastatur 1' keine Komma-Taste aufweist. Dafür ist in den Anzeigebereichen 3.1" und 3.2" jeweils eine festes Komma-Zeichen 37.1 und 37.2 angebracht. Bei einer Zahleneingabe über die Tastatur 1' erfolgt die Darstellung der eingegebenen Zahl stets von rechts nach links, d.h. die zuletzt eingegebene Ziffer erscheint in dem Anzeigebereich, der mit dem Eingangspufferspeicher verbunden ist, an der äußersten rechten Position und die zuvor eingegebenen Ziffern werden jeweils um einer Stelle nach links verschoben. Nachkommastellen müssen somit stets eingegeben werden. Soll beispielsweise die Zahl 15 eingegeben werden, so müssen die Ziffern 1, 5, 0, 0 eingegeben werden.

Es versteht sich, daß bei anderen Ausführungen der Erfindung für Währungen, bei denen Dezimalstellen unbedeutend sind, die unbedeutenden Dezimalstellen jeweils weggelassen oder durch ein entsprechendes Symbol ersetzt werden können. So können bei Währungen, die nur in einer Einheit bezeichnet werden, wie beispielsweise die italienische Lira oder der portugiesische Escudo, die Nachkommastellen komplett wegfallen. Insbesondere können bei Währungen, die in der Praxis nur in Tausendern oder höheren Vielfachen angegeben werden die drei letzten Ziffern durch ein Symbol für den Faktor "Tausend" ersetzt werden.

Bei einer anderen - nicht näher dargestellten Ausführungsform - ist vorgesehen, daß bei einer weiteren Eingabe von Ziffern über die letzte Kommastelle hinaus sich diese nach rechts verschiebt, so daß im Display nur noch lediglich eine oder keine Kommastelle wiedergegeben wird. Die Berechnung erfolgt in jedem Fall mit einer Genauigkeit von fünf Stellen, so daß bei großen Zahlen lediglich die Anzeige der letzten - unwichtigen - Dezimalstellen unterdrückt wird. Auf diese Weise ist ein überschlägiges Umrechnen von Währungsbeträgen auch bei sehr großen Summen möglich.

In Figur 7 ist in einem Teilausschnitt dargestellt, wie durch eine entsprechende optische Anordnung 3.3 die Darstellung der Displays vergrößert werden kann. Hierbei handelt es sich jeweils um ein Segment eines transparenten Zylinders, das mit seiner ebenen Seite dem Display zugewandt angebracht ist, so daß sich für die Darstellung eine vertikale Streckung ergibt. Da für jedes der beiden Displays eine getrennte Anordnung vorgesehen ist, ist die Verzerrung ein Minimum.

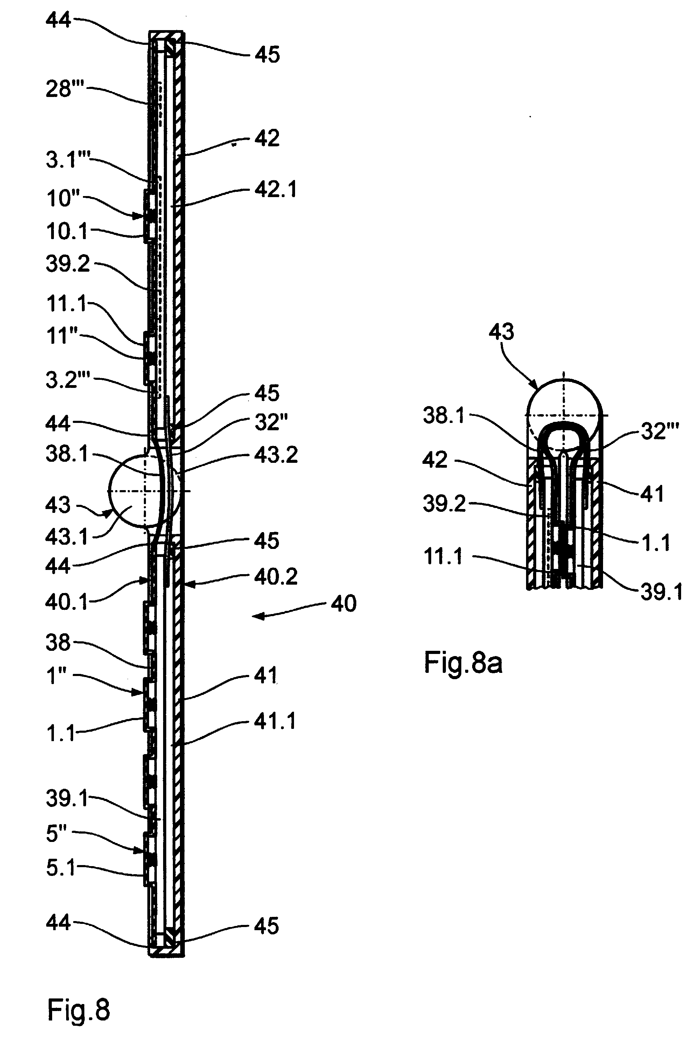

Figur 8 zeigt eine bevorzugte Ausführung der erfindungsgemäßen Vorrichtung. Bei dieser Ausführung ist das Gehäuse 40 mit Ausnehmungen 41.1, 42.1 versehen, in denen die elektronischen Elemente der Vorrichtung, also die Eingabeeinheit 1", das Betätigungselement 5", die Auswahlelemente 10" und 11", das Display 3"', die Verarbeitungsbaugruppe 2 und der Konstantenspeicher 4 angeordnet sind. Dabei sind an der den Ausnehmungen 41.1, 42.1 abgewandten Deckfläche 40.1 des Gehäuses 40 die Tasten 1.1 der Eingabeeinheit 1", die Taste 5.1 des Betätigungselements 5" und die Tasten 10.1 und 11.1 der Auswahlelemente 10" und 11" angeordnet und einstückig mit dem die Deckfläche 40.1 des Gehäuses 40 bildenden Element 38 ausgebildet. Im gezeigten Beispiel ist das Deckflächenelement 38 mit den Betätigungselementen nach Art einer Gummitastatur ausgeführt, es versteht sich jedoch, daß es auch nach Art einer Folien- oder Kunststofftastatur ausgebildet sein kann

Die Eingabeeinheit 1", die Verarbeitungsbaugruppe 2, der Konstantenspeicher 4 und das Betätigungselement 5" sind in einem unteren Träger 39.1 eingebettet und die Anzeigebereiche 3.1"' und 3.2"' des Displays 3"', die Auswahlelemente 10" und 11" sowie das Solarzellenfeld 28" sind in einem oberen Träger 39.2 eingebettet. Die galvanischen Verbindungen zwischen den in den beiden Trägern 39.1 und 39.2 eingebetteten elektronischen Baugruppen und -elementen sind in einem auf der Rückseite der beiden Träger 39.1 und 39.2 aufgebrachten, beispielsweise aufgeklebten flexiblen Leiterband 32"' eingebettet, das gleichzeitig auch eine mechanische Verbindung zwischen den beiden Trägern 39.1 und 39.2 darstellt. Die beiden Träger 39.1 und 39.2 sind fest mit dem Deckflächenelement 38 verbunden, so daß das Element 38 zusammen mit den Trägern 39.1 und 39.2 und dem flexiblen Leiterband 32"' eine geschlossene Funktionseinheit bildet, die sämtliche für die Umrechnung erforderlichen Funktionselemente enthält.

Das Gehäuse 40 besteht aus einer Gehäuseschale 40.2 mit einer unteren Gehäusehalbschale 41 und einer oberen Gehäusehalbschale 42, die über ein Gelenk 43 schwenkbar miteinander verbunden sind, das von an der unteren Gehäusehalbschale 41 angeformten Gelenkelementen 43.1 und damit zusammenwirkenden, an der oberen Gehäusehalbschale 42 angeformten Gelenkelementen 43.2 gebildet ist. Das Element 38 und somit die Träger 39.1 und 39.2 werden durch auf die Vorderseite 40.1 des Elements 38 einwirkende, an den öffnungsseitigen Kanten der Gehäusehalbschalen 41 und 42 angeordnete Halteelemente 44, die sie gegen elastische Abstandselemente 45 in den Gehäuseausnehmungen 41.1, 42.1 drücken, in ihrer Position gehalten. Um ein leichtes Zusammenklappen des Gehäuses 40 zu gewährleisten, weist das Deckflächenelement 38 im Bereich des Gelenks 43 eine Querschnittsschwächung in Form eines Abschnitts 38.1 mit geringer Materialstärke auf. Hierdurch kann das Element 38 in diesem Bereich beim Zusammenklappen der Vorrichtung problemlos geknickt werden.

Die Verbindung zwischen den Trägern 39.1 und 39.2 und dem Gehäuse 40 kann - beispielsweise durch entsprechend elastisch oder federnd ausgebildete Halteelemente 44 - lösbar gestaltet sein, so daß ein Auswechseln entweder des Gehäuses 40 oder der Träger 38 und 39 möglich ist. Es ist aber auch möglich die Elastizität des Elementes 38 beim Herstellen einer lösbaren Verbindung auszunützen, indem beispielsweise der Randbereich des Elementes 38 beim Herstellen der Verbindung zum Gehäuse 40 soweit deformiert wird, daß er unter die Halteelemente 44 geschoben werden kann. Das Lösen kann dann durch eine entsprechende Deformation des Elements 38 bewerkstelligt werden.

Die Außenkontur der Gehäusehalbschalen 41, 42 kann beliebig gestaltet sein, lediglich die Ausnehmungen 41.1 und 42.1 und die Halteelemente 44 müssen so ausgebildet sein, das die Ausnehmungen 41.1 und 42.1 die kompakte Funktionseinheit aus Deckflächenelement 38, Trägern 39.1 und 39.2 und dem Leiterband 32"' in sich aufnehmen können und die Halteelemente 44 die kompakte Funktionseinheit fixieren können.

Figur 8a zeigt einen Ausschnitt im Bereich der Gelenke 43 einer zusammengeklappten Vorrichtung, die im wesentlichen der Vorrichtung nach Figur 8 entspricht. Lediglich das flexible Leiterband 32"' ist nicht großflächig sondern in einem relativ schmalen gelenknahen Anschlußbereich mit den Trägern 39.1 und 39.2 verbunden. Die freie Länge des Abschnitts 38.1 des Deckflächenelements 38 zwischen den Trägern 39.1 und 39.2 übersteigt dabei etwas die freie Länge des Leiterbandes 32"' zwischen den Trägern 39.1 und 39.2, so daß der Abschnitt 38.1 im zusammengeklappten Zustand der Vorrichtung in der gezeigten Schnittebene etwa Ω-förmig geformt ist und radial leicht gegen das Leiterband 32"' drückt. Das Leiterband 32"' wird dadurch leicht gespannt und bildet einen gleichmäßigen buchrückenartigen Abschluß zwischen den beiden Gehäusehalbschalen 41 und 42. Die - außen gelegene - Rückseite des Bandes ist dabei in vorteilhafter Weise mit einer dem übrigen Äußeren des Rechners angepaßten Oberfläche versehen, welche beispielsweise mittels durch eines zusätzlichen flexiblen Kunststoffbandes auf den flexiblen Leiterstreifen aufgebracht ist. Der Längenunterschied zwischen dem Abschnitt 38.1 des Deckflächenelements 38 und dem Leiterband 32"' ist dabei so bemessen, daß im zusammengeklappten Zustand auf das Leiterband 32"' keinesfalls auch bei häufigem Auf- und Zuklappen eine zu starke Kraft ausgeübt wird, die die im Leiterband untergebrachten Verbindungsleitungen beschädigen könnte.

Das flexible Leiterband 32"' ist in der gezeigten Ausführung seitlich von dem Scharnier 43 und einem dazu bezüglich der Zeichenebene symmetrischen zweiten Scharnier 43 begrenzt, so daß das flexible Leiterband 32"' einen geschlossenen buchrückenartigen Abschnitt zwischen den beiden Scharnieren 43 bildet, wodurch ein optisch geschlossener Eindruck entsteht.

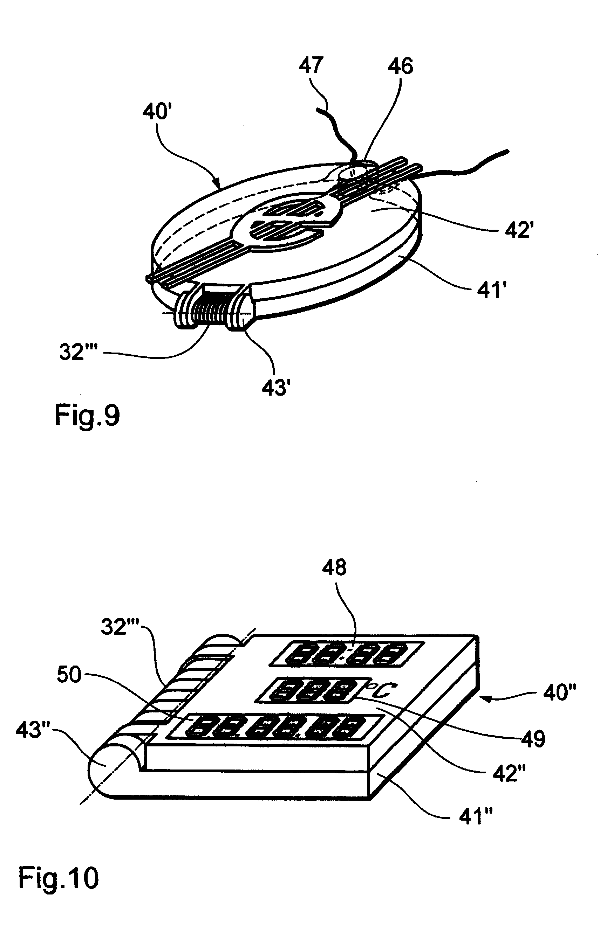

Die Figuren 9 und 10 zeigen weitere Ausführungsbeispiele der erfindungsgemäßen Vorrichtung nach Figur 8. Bei dem in Figur 9 gezeigten Beispiel ist das im zusammengeklappten Zustand gezeigte Gehäuse 40' nach Art eines Anhängers oder Amuletts ausgebildet. Die untere Gehäusehalbschale 41' und die obere Gehäusehalbschale 42' des Gehäuses 40' sind über das Gelenk 43' schwenkbar miteinander verbunden. Die elektrische Verbindung zwischen den im Unterteil 41' und den im Oberteil 42' angeordneten Vorrichtungselementen ist durch das flexible Leiterband 32"' hergestellt, das die (nicht dargestellten) Träger 39.1 und 39.2 miteinander verbindet. An der unteren Gehäusehalbschale 41' ist eine Öse 46 angeordnet, durch die ein Band 47 oder ein ähnliches Aufhängeelement geführt ist, um die Vorrichtung beispielsweise um den Hals gehängt zu tragen.

Bei der Gestaltung des Gehäuses besteht nahezu unbegrenzte Gestaltungsfreiheit. Es sind lediglich zur Aufnahme der über die Leiterfolie 32"' verbundenen Träger 39.1 und 39.2 entsprechende Ausnehmungen 41.1' und 42.1', Halteelemente 44' und elastische Abstandselemente 45' vorzusehen.

Figur 10 zeigt ein weiteres Ausführungsbeispiel, bei dem das im zusammengeklappten Zustand dargestellte Gehäuse 40" wiederum aus einer unteren Gehäusehalbschale 41" und einer oberen Gehäusehalbschale 42" aufgebaut ist, die über das Gelenk 43" schwenkbar miteinander verbunden sind. Die elektrische Verbindung zwischen den im Unterteil 41" und den im Oberteil 42" angeordneten Vorrichtungselementen ist durch das flexible Leiterband 32"' hergestellt, das die (nicht dargestellten) Träger 39.1 und 39.2 miteinander verbindet.

Im Oberteil 42" des Gehäuses 40" sind Display-Bereiche 48, 49 und 50 angeordnet, wobei der Display-Bereich 48 die Zeit, der Display-Bereich 49 die Temperatur und der Display-Bereich 50 das Datum anzeigt. Die Display-Bereiche 48, 49 und 50 sind dabei von demselben LCD-Display gebildet, das auf der Innenseite, d.h. auf den im zusammengeklappten Zustand einander zugewandten Seiten der Vorrichtung als Anzeigeeinheit 3 fungiert. Es ist jedoch selbstverständlich auch möglich, einzelne Displays für die Display-Bereiche 48, 49 und 50 vorzusehen.

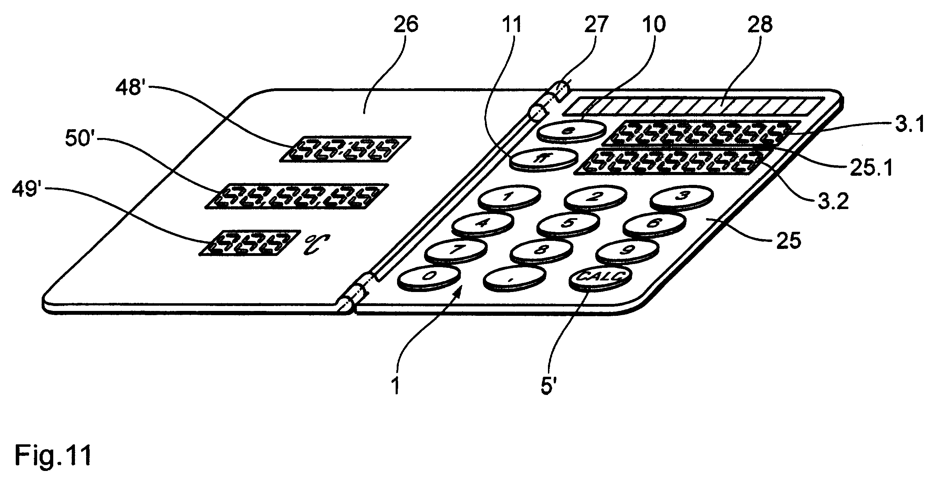

Figur 11 zeigt eine andere Ausführung der erfindungsgemäßen Vorrichtung, die im wesentlichen der Ausführung aus Figur 4 entspricht. Bei dieser Ausführung sind im Deckel 26 Display-Bereiche 48', 49' und 50' angeordnet sind, wobei der Display-Bereich 48' die Zeit, der Display-Bereich 49' die Temperatur und der Display-Bereich 50' das Datum anzeigt. Die Display-Bereiche 48', 49' und 50' sind dabei von einzelnen Displays für die Display-Bereiche 48', 49' und 50' gebildet; es ist aber auch möglich, ein einziges Display für die Display-Bereiche 48', 49' und 50' vorzusehen, das dann gegebenenfalls entsprechend unterteilt ist.

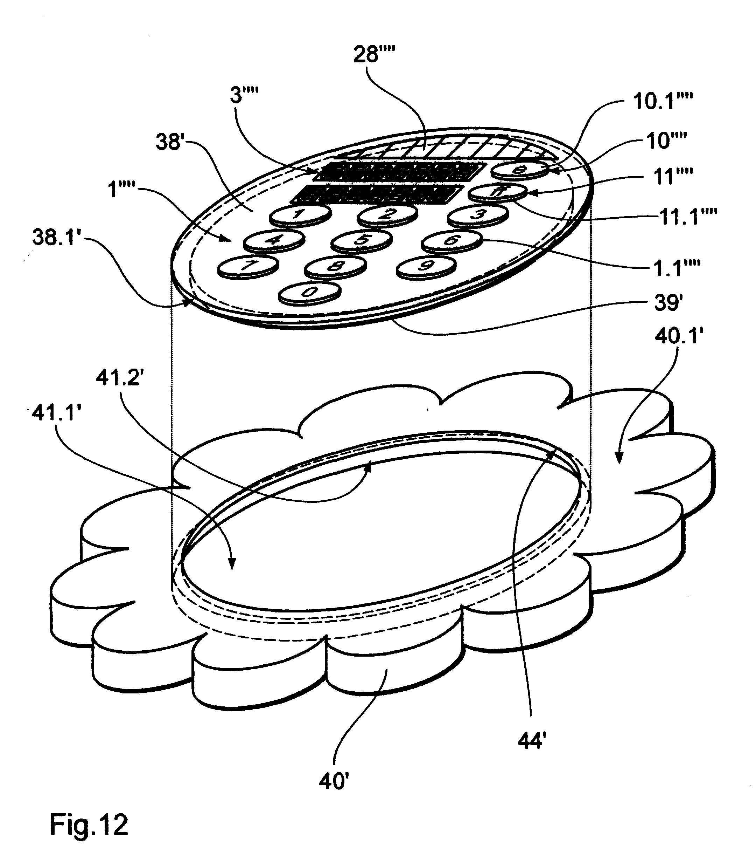

Figur 12 zeigt ein weiteres Ausführungsbeispiel der erfindungsgemäßen Vorrichtung vor der Montage. Die Vorrichtung weist eine Gehäuseschale 40' mit einer Ausnehmung 41.1' auf. Die Ausnehmung 41.1' weist eine umlaufende Nut 41.2' auf, so daß an der öffnungsseitigen Deckfläche der Gehäuseschale 40' ein ringförmiger Steg 44' gebildet ist, der einen geringeren Öffnungsdurchmesser als die Ausnehmung 41.1' aufweist und so ein an der Gehäuseschale 40' umlaufendes Halteelement bildet.

Die Vorrichtung umfaßt weiterhin eine geschlossene Funktionseinheit aus der Eingabeeinheit 1"", den Auswahlelementen 10"" und 11"", dem Display 3"", der Verarbeitungsbaugruppe 2 (nicht gezeigt) und dem Konstantenspeicher 4 (nicht gezeigt). Die Tasten 1.1"" der Eingabeeinheit 1"" und die Tasten 10.1"" und 11.1"" der Auswahlelemente 10"" und 11"" sind einstückig mit dem Deckflächenelement 38 ausgebildet, das aus einem elastischen Polymermaterial besteht. Im gezeigten Beispiel ist das Deckflächenelement 38 mit den Betätigungselementen nach Art einer Gummitastatur ausgeführt, es versteht sich jedoch, daß es auch nach Art einer Folien- oder Kunststofftastatur ausgebildet sein kann

Die Eingabeeinheit 1"", die Verarbeitungsbaugruppe 2, der Konstantenspeicher 4, das Display 3"", die Auswahlelemente 10"" und 11"" sowie das Solarzellenfeld 28"" sind in einem Träger 39' eingebettet bzw. auf diesem angeordnet. Der Träger 39' kann beispielsweise von einer Leiterplatte gebildet sein.

Die Ausnehmung 41.1' ist derart ausgebildet, daß sie die oben genannte Funktionseinheit in sich aufnehmen kann. Der Öffnungsquerschnitt des umlaufenden Steges 44' ist dabei größer als der auf der Unterseite des Deckflächenelements 38' befestigte Träger 39'. Der Rand 38.1' des Deckflächenelements 38' überragt den auf der Unterseite des Deckflächenelements 38' befestigten Träger 39' radial. Der elastische Rand 38.1' des Deckflächenelements 38' wird zur Montage der Funktionseinheit in der Ausnehmung 41.1' zunächst deformiert und rastet dann unter dem umlaufenden Steg 44' ein, um die Funktionseinheit in der Gehäuseschale zu fixieren. Um diese Deformation und das Einrasten zu ermöglichen, ist der Öffnungsradius des umlaufenden Steges 44' um wenigstens die Dicke des Deckflächenelements 38' im Bereich des Randes 38.1' größer als der Radius des auf der Unterseite des Deckflächenelements 38' befestigten Trägers 39'. Der Durchmesser des Deckflächenelements 38' entspricht etwa dem Durchmesser der umlaufenden Nut 41.2'.

Dank der Elastizität des Deckflächenelements 38' ist die Verbindung zwischen der Gehäuseschale 40' und der Funktionseinheit lösbar.

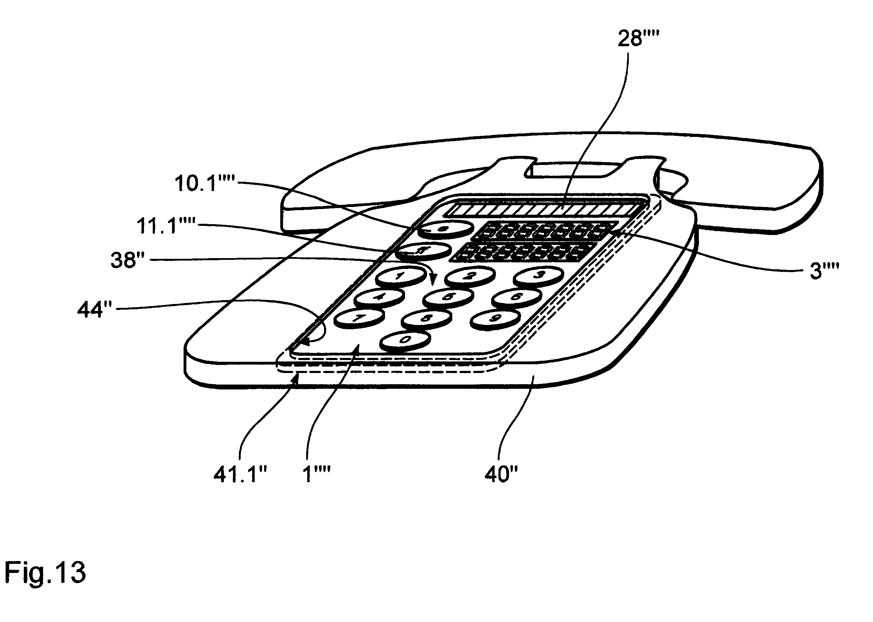

Figur 13 zeigt eine weitere bevorzugte Ausführung der Erfindung, die in ihrem Aufbau der Vorrichtung aus Figur 12 entspricht. Die Vorrichtung ist im montierten Zustand gezeigt und unterscheidet sich von der in Figur 12 dargestellten Vorrichtung lediglich in der Außenkontur der Gehäuseschale 40" und in der geometrischen Form der Ausnehmung 41.1", des Steges 44" und der dementsprechend geformten Funktionseinheit, die bei dieser Variante in der Ebene der Vorrichtung im wesentlichen rechteckig ausgebildet sind.

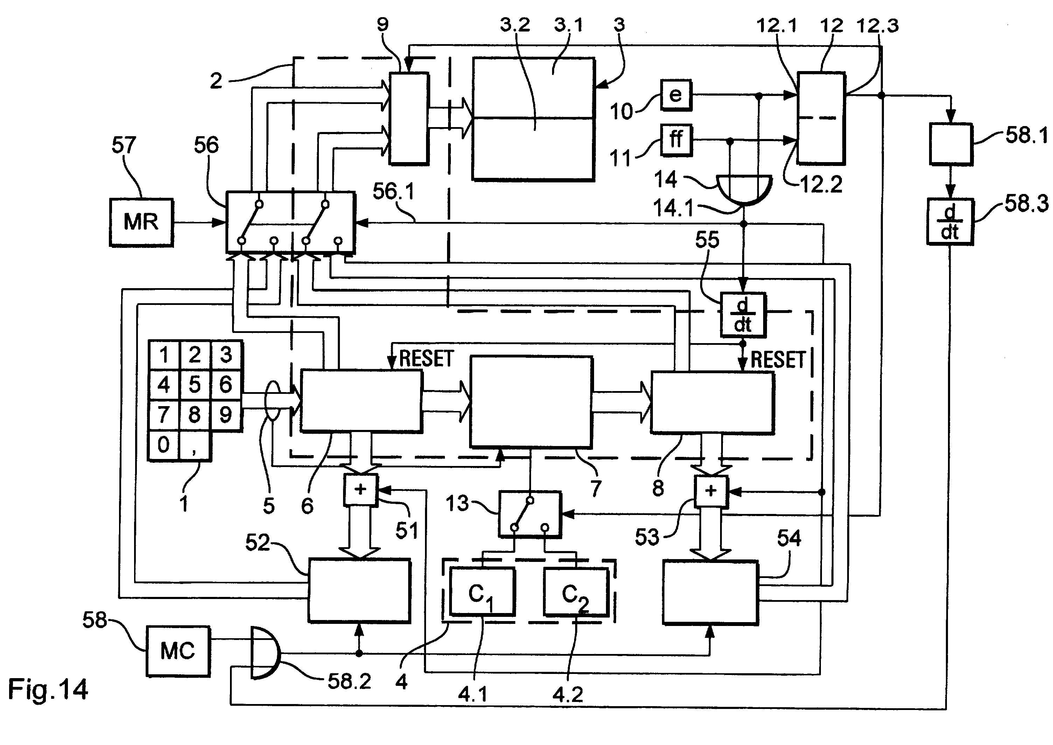

Figur 14 zeigt das Blockschaltbild einer weiteren bevorzugten Ausführung der Erfindung mit einer Additionsfunktion, die es ermöglicht, mehrere Zahlen einzugeben und deren Summe sowie deren Umrechnungswert auf dem Ausgabgedisplay anzeigen zu lassen. Der prinzipielle Aufbau dieser Ausführung entspricht demjenigen aus Figur 1, so daß hier lediglich die Abweichungen von der Ausführung gemäß Figur 1 beschrieben werden.

Der Eingangspufferspeicher 6 ist über einen ersten Addierer 51 mit dem Eingangssummenspeicher 52 verbunden und der Ausgangsspeicher 8 ist über einen zweiten Addierer 53 mit dem Ausgangssummenspeicher 54 verbunden. Die Addierer 51 und 53 addieren den Inhalt des jeweiligen Puffers 6, 8 zum Inhalt des jeweiligen Summenspeichers 52, 54. Die Addition wird durch Betätigung eines der beiden Auswahlelemente 10, 11 ausgelöst. Hierzu sind die beiden Addierer mit dem Ausgang 14.1 der ODER-Schaltung 14 verbunden. Um sicherzustellen, daß das ebenfalls durch eine Betätigung eines der beiden Auswahlelemente 10, 11 ausgelöste Rücksetzen der beiden Puffer 6, 8 erst erfolgt, wenn die Addition abgeschlossen ist, sind die beiden Puffer 6, 8 über ein D-Glied 55 mit dem Ausgang 14.1 der ODER-Schaltung 14 verbunden, das das Rücksetzen der beiden Puffer 6, 8 gegenüber der von den beiden Addierern 51 und 53 durchzuführenden Addition verzögert.

Weiterhin ist ein Schalter 56 vorgesehen, der entweder den Eingangspufferspeicher 6 und den Ausgangsspeicher 8 oder den Eingangssummenspeicher 52 und den Ausgangssummenspeicher 54 mit der Ausgabesteuereinheit 9 verbindet. Der Schalter 56 ist über die Leitung 56.1 mit dem Ausgang 14.1 der ODER-Schaltung 14 verbunden und so ausgebildet, daß er bei Betätigung eines der beiden Auswahlelemente 10, 11 den Eingangspufferspeicher 6 und den Ausgangsspeicher 8 mit der Ausgabesteuereinheit 9 verbindet. Der Schalter ist weiterhin mit einer Abruftaste 57 verbunden und weiterhin so ausgebildet, daß er bei Betätigung der Abruftaste 57 den Eingangssummenspeicher 52 und den Ausgangssummenspeicher 54 mit der Ausgabesteuereinheit 9 verbindet. Je nachdem, ob einer der beiden Auswahlelemente 10, 11 oder die Abruftaste 57 zuletzt betätigt wurde, werden auf dem Ausgabedisplay 3 somit die Inhalte der beiden Puffer 6, 8, also die zuletzt über die Tastatur 1 eingegebene Zahl und deren Umrechnungswert, oder die Inhalte der beiden Summenspeicher 52, 54 dargestellt, also die zuletzt Summe der über die Tastatur 1 eingegebenen Zahlen und deren Umrechnungswert. Es versteht sich jedoch, daß beispielsweise auf die Verbindungsleitung 56.1 verzichtet werden kann, wobei der Schalter dann so ausgebildet ist, daß er durch Betätigung der Abruftaste 57 wechselweise den Eingangspufferspeicher 6 und den Ausgangsspeicher 8 oder den Eingangssummenspeicher 52 und den Ausgangssummenspeicher 54 mit der Ausgabesteuereinheit 9 verbindet.

Die Rücksetzung des Eingangssummenspeichers 52 und des Ausgangssummenspeichers 54 auf Null erfolgt entweder durch Betätigung einer Rücksetztaste 58 oder durch eine Einrichtung 58.1 zur Erfassung einer Zustandsänderung am Ausgang 12.3 der Auswahlsteuereinrichtung 12, die über eine ODER-Schaltung 58.2 verknüpft mit dem Eingangssummenspeicher 52 und dem Ausgangssummenspeicher 54 verbunden sind. Die Einrichtung 58.1 ist dabei so ausgebildet, daß sie bei einer Zustandsänderung am Ausgang 12.3 der Auswahlsteuereinrichtung 12, einen Rücksetzimpuls an den Eingangssummenspeicher 52 und den Ausgangssummenspeicher 54 sendet. Eine solche Zustandsänderung am Ausgang 12.3 der Auswahlsteuereinrichtung 12 ergibt sich, wie oben ausführlich beschrieben, wenn eines der beiden Auswahlelemente 10, 11 zu Umschalten der Umrechnungsrichtung betätigt wird, d. h. wenn eines der beiden Auswahlelemente 10, 11 betätigt wird, nachdem zuvor das andere der beiden Auswahlelemente 10, 11 betätigt wurde. Der Einrichtung 58.1 ist ein Verzögerungselement 58.3 nachgeschaltet, so daß der Rücksetzimpuls den Eingangssummenspeicher 52 und den Ausgangssummenspeicher 54 zeitverzögert erreicht, um sicherzustellen, daß die Rücksetzung des Eingangssummenspeichers 52 und des Ausgangssummenspeichers 54 erst nach der ebenfalls durch eine Betätigung eines der beiden Auswahlelemente 10, 11 ausgelösten Addition durch die Addierer 51 und 53 erfolgt. Es versteht sich, daß das Rücksetzen durch die Einrichtung 58.1 nicht unbedingt erforderlich ist. Es würde genügen, lediglich eine Rücksetztaste 58 vorzusehen. Die Einrichtung 58.1 erübrigt aber beim Wechsel der Umrechnungsrichtung die notwendige Betätigung der Rücksetztaste 58 und vereinfacht somit die Bedienung der Vorrichtung.

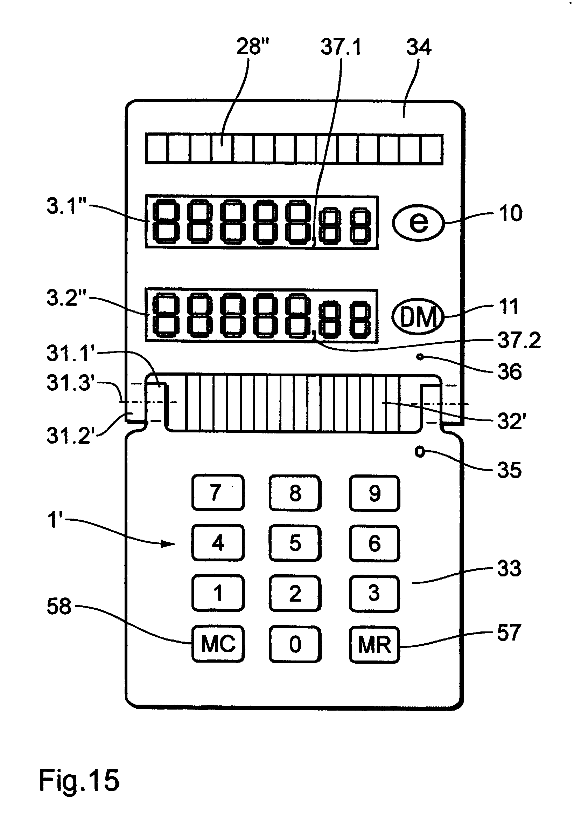

Figur 15 zeigt eine Ausführung einer Vorrichtung gemäß Figur 14, die im wesentlichen der Ausführung aus Figur 6 entspricht. Die Tastatur 1', die Abruftaste 57 und die Rücksetztaste 58 sind in einer unteren Gehäusehalbschale 33 angeordnet, die mit einer oberen Gehäusehalbschale 34 über an der unteren Gehäusehalbschale 33 angeformte Gelenkelemente 31.1' und damit zusammenwirkende, an der oberen Gehäusehalbschale 34 angeformte Gelenkelemente 31.2' um eine Achse 31.3' schwenkbar verbunden ist.

Im Gehäuseoberteil 34 sind die Anzeigebereiche 3.1" und 3.2", die Auswahlelemente 10 und 11 sowie das Solarzellenfeld 28" angeordnet. Am Gehäuseunterteil 33 ist ein Schalter 35 angeordnet, auf den im zusammengeklappten Zustand der Vorrichtung ein am Gehäuseoberteil 34 angeformter Stift 36 derart einwirkt, daß die Vorrichtung abgeschaltet wird. Wird die Vorrichtung aufgeklappt, so löst sich der Stift 36 vom Schalter 35 und die Vorrichtung wird eingeschaltet.

Wie Figur 15 zu entnehmen ist, weisen die Stellen der Anzeigebereiche 3.1" und 3.2", die nach, d. h. rechts von dem fest vorgesehenen Komma 37.1 bzw. 37.2 angeordnet sind, eine geringere Größe als die Stellen, die vor, d. h. links von dem Komma 37.1 bzw. 37.2 angeordnet sind. Hierdurch ist das fehlerfreie Ablesen der Zahlenwerte von den Anzeigebereiche 3.1" und 3.2" noch zusätzlich erleichtert. Weiterhin ist zum einfacheren Ablesen des Ergebnisses jeweils eine Markierung 37.3 bzw. 37.4 vorgesehen, welche in bekannter Weise die Trennung zwischen Tausendern und Hundertern markiert. Es versteht sich, daß bei anderen Varianten der Erfindung mit größeren Anzeigebereichen noch weitere derartige Markierungen für den Faktor "Tausend" vorgesehen sein können.

Die in den beiden Gehäuseteilen 33 und 34 angeordneten Elemente der Vorrichtung sind über ein flexibles Leiterband 32' miteinander verbunden.

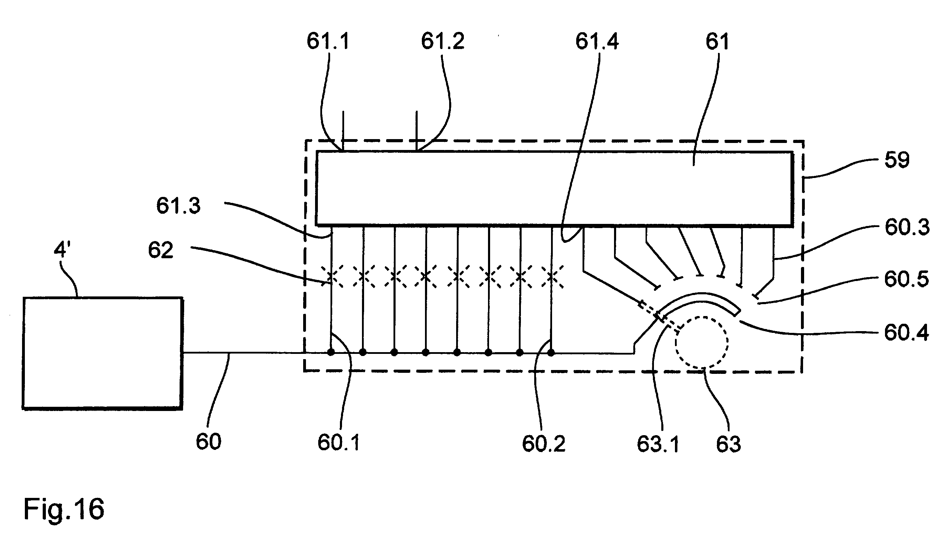

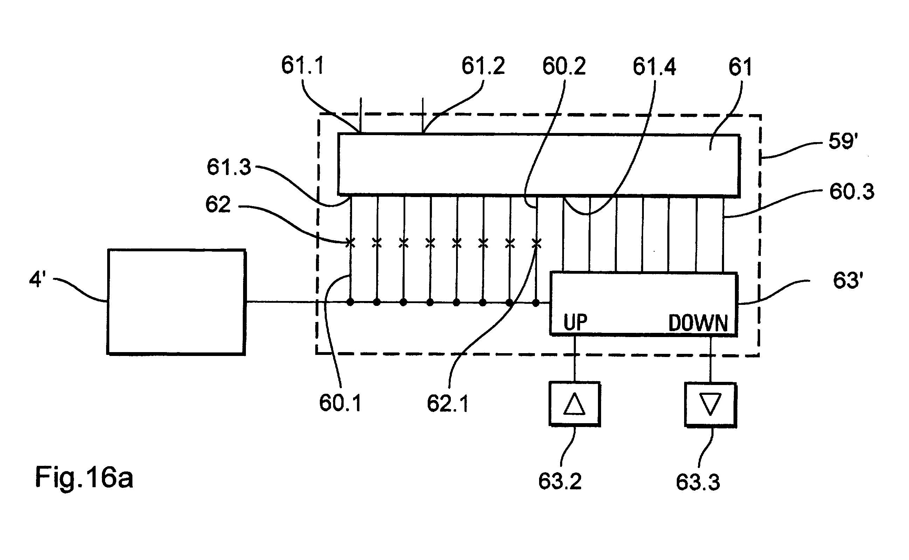

Figur 16 zeigt das Blockschaltbild einer weiteren Ausführung der erfindungsgemäßen Vorrichtung. Die Elemente dieser Vorrichtung und deren Funktionsweise entsprechen im wesentlichen denjenigen der Ausführung aus Figur 1, so daß hier lediglich die Unterschiede beschrieben werden.

Bei dieser Ausführung ist die Auswahlschaltung 13 über einen Währungsschalter 59 und eine Leitung 60 mit dem Konstantenspeicher 4' verbunden. Die Leitung 60 ist dabei über erste Auswahlleitungen 60.1 und eine zweite Auswahlleitung 60.2 mit den ersten Eingängen 61.3 eines Ausleseelements 61 verbunden. Die ersten und zweiten Auswahlleitungen 60.1 und 60.2 sind an den Unterbrechungsstellen 62 unterbrechbar. Je nachdem, welche der ersten Auswahlleitungen 60.1 unterbrochen ist, stehen an den Ausgängen 61.1 und 61.2 des Ausleseelements 61 die im Konstantenspeicher 4' gespeicherten Umrechnungskonstanten C₁' und C₂' zur Verfügung, die für die Umrechnung von einer ersten Währung in eine mit der Durchtrennung der entsprechenden ersten Auswahlleitung 60.1 ausgewählte zweite Währung und umgekehrt erforderlich sind.

Ist die zweite Auswahlleitung 60.2 unterbrochen, so erfolgt die Auswahl der zweiten Währung, in die umgerechnet werden soll und umgekehrt, durch einen Währungsauswahlschalter 63, der über ein Überbrückungselement 63.1 die Verbindung zwischen dritten Auswahlleitungen 60.3 und dem Abschnitt 60.4 des Leiters 60 herstellt. Die dritten Auswahlleitungen 60.3 sind dabei mit den zweiten Eingängen 61.4 des Ausleseelements 61 verbunden. Je nachdem, welche der dritten Auswahlleitungen 60.3 über das Überbrückungselement 63.1 mit dem Abschnitt 60.4 verbunden ist, stehen an den Ausgängen 61.1 und 61.2 des Ausleseelements 61 die im Konstantenspeicher 4' gespeicherten Umrechnungskonstanten C₁' und C₂' zur Verfügung, die für die Umrechnung von einer ersten Währung in eine durch die Schalterstellung des Währungsauswahlschalters 63 ausgewählte zweite Währung und umgekehrt erforderlich sind.

Der Währungsauswahlschalter 63 kann dabei als Schiebe-, Tast- oder Drehschalter ausgebildet sein. Die Unterbrechung einer der ersten Auswahlleitungen 60.1 oder der zweiten Auswahlleitung 60.2 an den Unterbrechungsstellen 62 kann dabei schon während der Herstellung der Schaltkreise der Vorrichtung erfolgen. Aus Gründen der rationelleren Fertigung erfolgt sie vorteilhafterweise aber erst nach Herstellung der Schaltkreise der Vorrichtung.

Ist lediglich eine der ersten Auswahlleitungen 60.1 unterbrochen und die zweite Auswahlleitung 60.2 intakt, so ist eine feste zweite Währung ausgewählt und die Vorrichtung ist dann nur für die Umrechnung in diese zweite Währung geeignet. Ist jedoch die zweite Auswahlleitung 60.2 unterbrochen, so kann mittels des Währungsauswahlschalters 63 die gewünschte zweite Währung eingestellt werden und die Vorrichtung ist dann für die wahlweise Umrechnung in mehrere verschiedene zweite Währungen geeignet.

Es versteht sich, daß bei anderen Varianten der Erfindung im Speicher 4' auch nur eine Umrechnungskonstante für jede Umrechnung zwischen zwei Währungen gespeichert sein kann. Die Recheneinheit muß dann lediglich so ausgebildet sein, daß die Umrechnung durch Multiplikation bzw. Division mit dieser Umrechnungskonstante erfolgt, wie dies beispielsweise zu Figur la beschrieben wurde.

Die Figur 16a zeigt Blockschaltbild einer weiteren bevorzugten Ausführungsform eines Details, nämlich des Währungsschalters 59 aus Fig. 16. Der Währungsschalter 59' entspricht in seinem Aufbau und seiner Funktion im wesentlichen dem Währungsschalter 59 aus Figur 16, so daß hier lediglich die Unterschiede beschrieben werden sollen.

Im gezeigten Fall ist die zweite Auswahlleitung 60.2 an der Unterbrechungsstelle 62.1 unterbrochen, so daß die Auswahl der zweiten Währung, in die umgerechnet werden soll und umgekehrt, durch einen Währungsauswahlschalter 63' erfolgt, der wahlweise die Verbindung zwischen einer der dritten Auswahlleitungen 60.3 und dem Leiters 60 herstellt. Zur Auswahl der dritten Auswahlleitung 60.3, die mit dem Leiter 60 verbunden ist, sind zwei mit dem Währungsauswahlschalter 63' verbundene Wahltasten 63.2 und 63.3 vorgesehen, die nach Art von Lauftasten ausgebildet sind. Eine Betätigung der ersten Wahltaste 63.2 bewirkt, daß die Verbindung zwischen dem Leiter 60 und der in der Reihenfolge der dritten Auswahlleitungen 60.3 jeweils nachfolgenden dritten Auswahlleitung 60.3 hergestellt wird. Wird die zweite Wahltaste 63.3 betätigt, so wird der Leiter 60 mit der in der Reihenfolge der dritten Auswahlleitungen 60.3 jeweils vorangehenden dritten Auswahlleitung 60 verbunden.

Die dritten Auswahlleitungen 60.3 sind, wie schon zu Figur 16 beschrieben, mit den zweiten Eingängen 61.4 des Ausleseelements 61 verbunden. Je nachdem, welche der dritten Auswahlleitungen 60.3 über den Währungsauswahlschalter 63' mit der Leitung 60 verbunden ist, stehen an den Ausgängen 61.1 und 61.2 des Ausleseelements 61 die im Konstantenspeicher 4' gespeicherten Umrechnungskonstanten C₁' und C₂' zur Verfügung, die für die Umrechnung von einer ersten Währung in eine durch den Währungsauswahlschalter 63 ausgewählte zweite Währung und umgekehrt erforderlich sind.

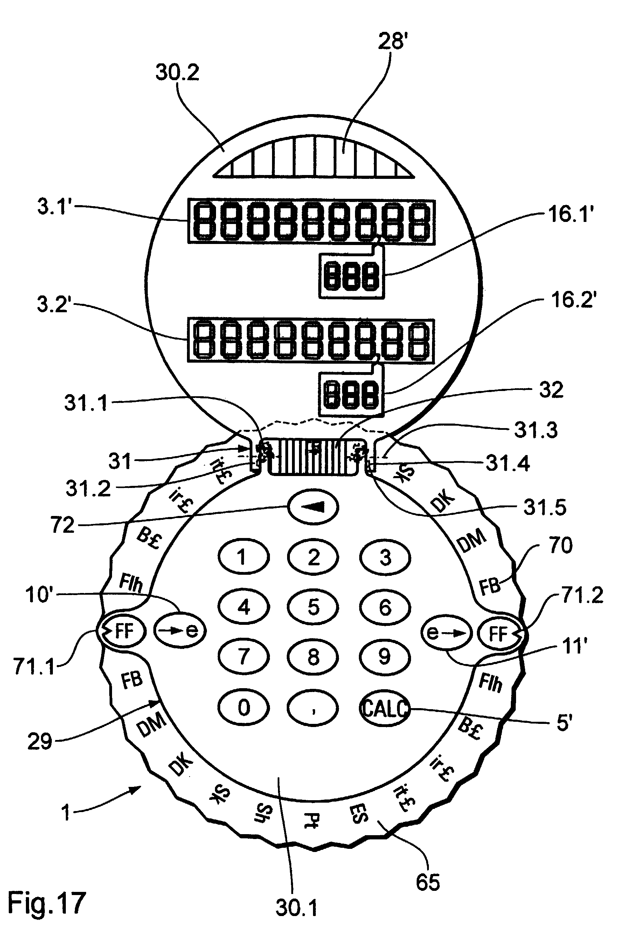

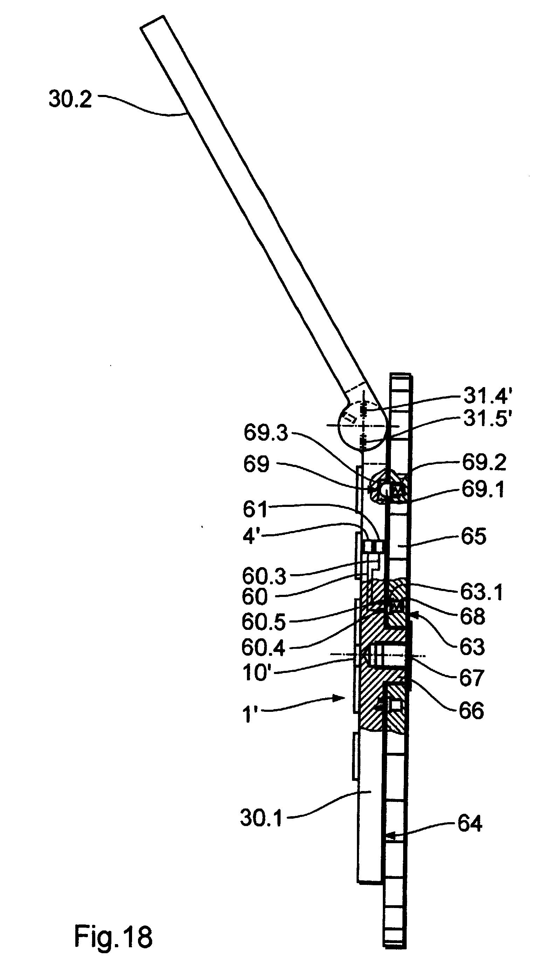

Die Figuren 17 und 18 zeigen eine Ausführung der Vorrichtung nach Figur 16, bei der die zweite Auswahlleitung 60.2 unterbrochen wurde, so daß die Auswahl der zweiten Währung über einen Währungsauswahlschalter 63 erfolgt. Die gezeigte Ausführung entspricht in wesentlichen Teilen der Ausführung nach Figur 5, so daß lediglich auf die Unterschiede eingegangen wird.

Der Währungsauswahlschalter 63 ist auf der Unterseite 64 des unteren Gehäuseteils 30.1 angeordnet. Er umfaßt ein Rad 65, das drehbar auf einem an der Unterseite 64 des Gehäuseteils 30.1 angeordneten Zapfen 66 gelagert ist und dort durch einen Halter 67 axial fixiert ist. Auf der der Gehäuseunterseite 64 zugewandten Seite des Rades 65 ist das Überbrückungselement 63.1 angeordnet, das von einer Feder 68 gegen den Kontakt 60.4 und einen Kontakt 60.5 gedrückt wird, die in der Gehäuseunterseite 64 eingebettet sind, und so eine elektrisch leitende Verbindung zwischen diesen beiden Kontakten 60.4 und 60.5 herstellt. Der Kontakt 60.4 ist über die Leitung 60 mit dem Konstantenspeicher 4' und der Kontakt 60.5 über eine dritte Auswahlleitung 60.3 mit dem Ausleseelement 61 verbunden. Der Kontakt 60.4 ist dabei kreisringförmig ausgebildet und konzentrisch zum Zapfen 66 angeordnet. Die einzelnen Kontakte 60.5 sind kreisringförmig und konzentrisch zum Zapfen 66 angeordnet.

Auf der der Gehäuseunterseite 64 zugewandten Seite des Ringes 65 ist eine nach Art einer Kugelrasteinrichtung ausgebildete Rasteinrichtung 69 angeordnet, die das Rad 65 gegen unbeabsichtigtes Verdrehen sichert. Hierbei greift ein im Rad 65 geführtes und durch eine Feder 69.2 gegen die Gehäuseunterseite 64 gedrücktes Rastelement 69.1 in eine Rastnut 69.3 in der Gehäuseunterseite 64 ein. Die Rastnuten 69.3 sind in der Gehäuseunterseite 64 kreisringförmig und konzentrisch zum Zapfen 66 derart angeordnet, daß in jeder Rastposition des Rades 65 das Überbrückungselement 63.1 eine elektrisch leitende Verbindung zwischen dem Kontakt 60.4 und einem Kontakt 60.5 herstellt.

Das Rad 65 weist einen größeren Durchmesser als der Gehäuseunterteil 30.1 auf. Der über den Gehäuseunterteil 30.1 hinausragende Teil des Rades ist auf der Gehäuseunterseite 64 zugewandten Seite entsprechend den Rastpositionen der Rasteinrichtung 69 mit Währungsbezeichnungen 70 für die auswählbaren unterschiedlichen zweiten Währungen gekennzeichnet, wobei jedes Währungszeichen 70 zweimal an diametral einander gegenüberliegenden Positionen auf dem Rad 65 erscheint. An dem Gehäuseunterteil 30.1 sind zwei einander ebenfalls diametral gegenüberliegende Sichtfenster 71.1 und 71.2 angeformt, in denen jeweils das auf dem Ring 65 angebrachte Währungssymbol der derzeit ausgewählten zweiten Währung zu sehen ist. Die Sichtfenster 71.1 und 71.2 können dabei nach Art einer Lupe ausgebildet sein, um das Ablesen der derzeit ausgewählten zweiten Währung zu erleichtern.

Neben dem ersten Sichtfenster 71.1 ist der erste Auswahlschalter 10' und neben dem zweiten Sichtfenster 71.2 ist der zweite Auswahlschalter 11' angeordnet, so daß eine einfache optische Zuordnung zwischen der ausgewählten zweiten Währung und der Umrechnungsrichtung gewährleistet ist.

Wie Figur 17 weiterhin zu entnehmen ist, ist eine Korrekturtaste 72 vorgesehen, bei deren Betätigung jeweils die letzte über die Tastatur eingegebene Ziffer und vorzugsweise das Komma gelöscht werden kann, um so die leichte Korrektur von Eingabefehlern zu ermöglichen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Insbesondere sind die dargestellten Arbeitsprinzipien nicht auf eine Realisierung in fest verdrahteter Logik beschränkt. Eine Implementierung kann auch jederzeit in einer rein softwaremäßig gesteuerten Ausführung erfolgen, bei der dann die zu erzeugenden Verknüpfungen logisch nacheinander durchgeführt werden. Wenn dies auch ein Rechenprogramm voraussetzt, so ist damit nicht eine Programmierung durch den Anwender gemeint, welche in der Eingabe von Rechenschritten oder von Umrechnungsfaktoren besteht. Die Erfindung verbessert insoweit auch die entsprechenden Verfahren zur Umrechnung und kann auch in größeren Geräten enthalten sein, um diesen zusätzlich die Möglichkeit einer vereinfachten Umrechnung zwischen Währungen zu geben. Es versteht sich im übrigen, daß auch eine wie auch immer geartete Kombination der genannten Realisierungsvarianten möglich ist.

## Patentansprüche

1. Vorrichtung zur Währungsumrechnung mit einer Eingabeeinheit (1), einer damit verbundenen Verarbeitungseinheit (2) zur Durchführung der Umrechnung und Steuerung der Ausgabe mittels einer mit der Verarbeitungseinheit (2) verbundenen Ausgabeeinheit (3, 3'), einem mit der Verarbeitungseinheit (2) verbundenen Speicher (4), einem Auslöseelement (5, 5') zum Starten des Umrechnungsvorgangs und mindestens einem Auswahlelement (10, 10') zur Auswahl der Umrechnungsrichtung von der ersten Währung in die zweite bzw. umgekehrt,
**dadurch gekennzeichnet,**
daß die Recheneinheit (7; 7') gesteuert von der Auslöseeinheit (5)
über eine mit dem Ausgang (12.3) der Auswahlsteuereinrichtung (12) verbundene, in Abhängigkeit vom Zustand am Ausgang (12.3) der Auswahlsteuereinrichtung (12) geschaltete Umschaltvorrichtung (13) auf eine in dem Speicher (4) vorhandene erste Umrechnungskonstante (C₁) oder zweite Umrechnungskonstante (C₂) zugreift, wobei die zweite Umrechnungskonstante den Kehrwert der ersten bildet, oder
in Abhängigkeit vom Zustand am Ausgang (12.3) der Auswahlsteuereinrichtung (12) und gesteuert von der Auslöseeinheit (5) zur Multiplikation bzw. Division auf eine in dem Speicher (4") vorhandene Umrechnungskonstante (C₁) zugreift, und
daß die Umrechnungskonstante (C₁) bzw. die Umrechnungskonstanten (C₁, C₂) als Festwerte in einem Speicher (4; 4'; 4") festgehalten sind, bei dem die Auswahl einer von mehreren Umrechnungskonstanten bzw. eines von mehreren Paaren von Umrechnungskonstanten oder die Auswahl zwischen einer Betriebsmöglichkeit mit nur einer Umrechnungskonstante bzw. nur einem Paar von Umrechnungskonstanten und einer Betriebsmöglichkeit, die eine Auswahl zwischen mehreren Betriebsmöglichkeiten einschließt, durch eine nicht umkehrbare Einwirkung erfolgt.

2. Vorrichtung nach Anspruch 1, **dadurch gekennzeichnet,** daß die nicht umkehrbare Einwirkung in einem Zerstören von elektrischen Leiterbahnen, insbesondere durch Schmelzen infolge eines Stromflusses, besteht.

3. Vorrichtung nach einem der vorangehenden Ansprüche, **dadurch gekennzeichnet,** daß die nicht umkehrbare Einwirkung in einem permanenten galvanischen Verbinden von Leiterbahnen zum Erzeugen einer leitenden Brücke besteht.

4. Vorrichtung nach einem der vorangehenden Ansprüche, **dadurch gekennzeichnet,** daß für die Auswahl unterschiedlicher Umrechnungskonstanten bzw. unterschiedlicher Paare von Umrechnungskonstanten ein mit der Leiteroberfläche einer Leiterplatte in Wechselwirkung tretender Gleit-, Dreh- oder Schiebeschalter vorgesehen ist.

5. Vorrichtung nach einem der vorangehenden Ansprüche, **dadurch gekennzeichnet,** daß für die Auswahl unterschiedlicher Umrechnungskonstanten bzw. unterschiedlicher Paare von Umrechnungskonstanten ein oder mehrere Tastschalter vorgesehen sind, durch welche einzelne in einem Speicher vorhandene Umrechnungskonstanten bzw. Paare von Umrechnungskonstanten einzeln aktivierbar sind.

6. Vorrichtung nach einem der vorangehenden Ansprüche, **dadurch gekennzeichnet,** daß die Ausgabeeinheit (3, 3') einen ersten Ausgabebereich (3.1, 3.1') und einen zweiten Ausgabebereich (3.2, 3.2') aufweist.

7. Vorrichtung nach einem der vorangehenden Ansprüche, **dadurch gekennzeichnet,** daß die Ausgabesteuerung (9) mit dem Ausgang (12.3) der Auswahlsteuereinrichtung (12) verbunden ist und in Abhängigkeit von dessen Zustand den Inhalt des Eingangspufferspeichers (6) im ersten Ausgabebereich (3.1) und den Inhalt des Ausgangspufferspeichers (8) im zweiten Ausgabebereich (3.2) wiedergibt oder umgekehrt, wobei dem ersten Ausgabebereich (3.1) eine der ersten Währung entsprechende Kennzeichnung und dem zweiten Ausgabebereich (3.2) eine der zweiten Währung entsprechende Kennzeichnung zugeordnet ist.

8. Vorrichtung nach einem der vorangehenden Ansprüche, **dadurch gekennzeichnet,** daß die Ausgabesteuerung (9') den Inhalt des Eingangspufferspeichers (6) im ersten Ausgabebereich (3.1') und den Inhalt des Ausgangspufferspeichers (8) im zweiten Ausgabebereich (3.2') wiedergibt, wobei sie mit dem Ausgang (12.3) der Auswahlsteuereinrichtung (12) verbunden ist und in Abhängigkeit von dessen Zustand ein der Ausgangswährung entsprechendes Zeichen in einem ersten Anzeigefeld (16.1) im ersten Ausgabebereich (3.1') und ein der Zielwährung entsprechendes Zeichen in einem zweiten Anzeigefeld (16.2) im zweiten Ausgabebereich (3.2') wiedergibt.

9. Vorrichtung, insbesondere nach einem der vorangehenden Ansprüche, **dadurch gekennzeichnet,** daß sämtliche Bedien- und Funktionselemente an der die ersten Verbindungsmittel aufweisenden Frontbaugruppe angebracht sind, so daß die im übrigen keine geschlossene rückwärtige Gehäuseabdeckung aufweisende Frontbaugruppe mit den Bedien- und Funktionselementen wahlweise in unterschiedlich geformte aber übereinstimmende zweite Verbindungsmittel aufweisende Gehäuseschalen einfügbar ist.

10. Vorrichtung nach Anspruch 9, **dadurch gekennzeichnet,** daß die ersten und zweiten Verbindungsmittel aus, insbesondere im Bereich der Gehäuseinnenwandung bzw. der Außenkante der Frontbaugruppe umlaufenden, Rastmitteln zum gegenseitigen Eingriff bestehen.

11. Vorrichtung nach einem der Ansprüche 9 oder 10, **dadurch gekennzeichnet**, daß die Frontbaugruppe einstückig aus einem gummiartigen Elastomermaterial gefertigt ist, welches insbesondere Tastenmittel umfaßt.

12. Vorrichtung nach Anspruch 11, **dadurch gekennzeichnet,** daß das erste und zweite Verbindungsmittel eine umlaufende Rastung umfassen.
